# EUROPEAN PATENT APPLICATION

(11) **EP 4 844 940 A1**
(43) Date of publication of application: **25.11.2026**
(21) Application number: 24946733.3
(22) Date of filing: 12.07.2024
(51) Int. Cl.: H01M 50/593, H01M 10/058

(54) **BATTERY CELL, BATTERY AND ELECTRICAL DEVICE**

(71) Applicant: Contemporary Amperex Technology Co., Limited, Ningde, Fujian 352100 (CN)
(72) Inventor: CHEN, Shengwang, Ningde, Fujian 352100 (CN); HUANG, Shaobin, Ningde, Fujian 352100 (CN); GUO, Zhijun, Ningde, Fujian 352100 (CN); WANG, Peng, Ningde, Fujian 352100 (CN)
(74) Representative: Kraus & Lederer PartGmbB
(86) International application number: PCT/CN2024/105249
(87) International publication number: WO 2026/011425

(57) **Abstract**

Provided are a battery cell (10), a battery (100) and an electrical device. The battery cell (10) comprises a casing (11), a first end cap assembly (13), an electrode assembly (14) and a separator (12); the first end cap assembly (13) comprises fitting protrusions (131) and a first electrode lead-out member (17); the electrode assembly (14) is accommodated in the casing (11); the electrode assembly (14) comprises a main body part (141) and a tab (142); the separator (12) is arranged between the first electrode lead-out member (17) and the main body part (141); the tab (142) passes through the separator (12) and is electrically connected to the first electrode lead-out member (17); the separator (12) comprises limiting protrusions (123); each limiting protrusion (123) is provided with a limiting hole (121); the wall of each limiting hole (121) is provided with an elastic deformation structure; the fitting protrusions (131) fit the elastic deformation structures; each elastic deformation structure comprises a pass-through hole (1231); the elastic deformation structures are configured to elastically deform when the fitting protrusions (131) are inserted into the limiting holes (121) and pass through the pass-through holes (1231). Providing the elastic deformation structures on the separator (12) can satisfy assembly requirements without the need to provide deformation structures on the fitting protrusions (131), thereby reducing the occurrence of fractures of the fitting protrusions (131) during assembly processes.

## Description

### TECHNICAL FIELD

The present application relates to the field of battery technologies, and in particular, to a battery cell, a battery, and an electric device.

### BACKGROUND

With the development of new energy, an increasing number of fields are using new energy as power. With advantages such as high energy density, support for cyclic charging, safety, and environmental friendliness, batteries have been widely used in fields such as new energy vehicles, consumer electronics, and energy storage systems.

A battery includes at least one battery cell, and the battery cell includes a housing, a bracket, and a cover plate, where the bracket is disposed in the housing and is provided with a locking hole, the cover plate is provided with a snap-fit member, the snap-fit member is a protruding member, and a deformation groove is formed on the protruding member, so that the protruding member can be snapped into the locking hole when the deformation groove undergoes elastic deformation. However, the deformation groove weakens the strength of the protruding member, making the protruding member prone to breakage during assembly.

### SUMMARY

In view of the above problems, the present application provides a battery cell, a battery, and an electric device, which solve the problem that the protruding member on the cover plate is prone to breakage during assembly.

A first aspect of the present application proposes a battery cell, the battery cell including:
a housing, the housing including a first opening;
a first end cover assembly, where the first end cover assembly is configured to cover the first opening, and the first end cover assembly includes a snap-fitting protrusion and a first electrode lead-out member;
an electrode assembly, where the electrode assembly is accommodated in the housing, and the electrode assembly includes a main body portion and a tab extending from the main body portion; and
a separator, where at least part of the separator is disposed between the first electrode lead-out member and the main body portion, the tab passes through the separator and is electrically connected to the first electrode lead-out member, the separator includes a limiting protrusion, a limiting hole is formed on the limiting protrusion, the limiting hole formed along a thickness direction of the separator, an elastic deformation structure is disposed on a hole wall of the limiting hole, and the snap-fitting protrusion is snap-fitted with the elastic deformation structure;
where the elastic deformation structure includes a through hole, the through hole is in communication with the limiting hole, and the elastic deformation structure is configured to undergo elastic deformation when the snap-fitting protrusion is inserted into the limiting hole and passes through the through hole.

Specifically, during assembly, the separator is disposed in the housing, then the snap-fitting protrusion of the first end cover assembly is inserted into the limiting hole of the limiting protrusion, and as the snap-fitting protrusion is gradually inserted, the snap-fitting protrusion enters the through hole of the elastic deformation structure. When the snap-fitting protrusion passes through the through hole, the elastic deformation structure undergoes elastic deformation, so that the snap-fitting protrusion can be snap-fitted with the elastic deformation structure. Providing the elastic deformation structure on the separator eliminates the need for a deformation structure on the snap-fitting protrusion to meet the assembly requirements, thereby enhancing the structural strength of the snap-fitting protrusion and reducing the occurrence of breakage of the snap-fitting protrusion during assembly.

In some embodiments of the present application, the elastic deformation structure is a cylindrical structure, an interior of the cylindrical structure forms the through hole, a deformation gap is formed on the cylindrical structure, and a gap is disposed between an outer peripheral surface of the elastic deformation structure and the hole wall of the limiting hole. Providing the deformation gap enables the elastic deformation structure to have deformation capability, and at the same time, disposing the gap between the elastic deformation structure and the hole wall of the limiting hole provides deformation space for the elastic deformation structure to undergo elastic deformation, thereby effectively meeting the requirement for the snap-fitting protrusion to pass through the through hole of the elastic deformation structure, and effectively achieving a snap-fit engagement between the snap-fitting protrusion and the elastic deformation structure.

In some embodiments of the present application, the gap between the outer peripheral surface of the elastic deformation structure and the hole wall of the limiting hole tends to increase along a direction from the first end cover assembly to the main body portion. By disposing the gap between the elastic deformation structure and the hole wall of the limiting hole, the elastic deformation structure has sufficient deformation space to meet the requirement for the snap-fitting protrusion to pass through, thereby effectively achieving a snap-fit engagement between the snap-fitting protrusion and the elastic deformation structure.

In some embodiments of the present application, the cylindrical structure extends obliquely along a direction from the first end cover assembly to the main body portion. By disposing the cylindrical elastic deformation structure in the direction from the first end cover assembly to the main body portion, the cylindrical elastic deformation structure has a structure with a large end and a small end, where an end facing the first end cover assembly is the large end, and an end facing the main body portion is the small end. The snap-fitting protrusion enters the through hole from the large end, and as the snap-fitting protrusion is continuously inserted, the elastic deformation structure is effectively driven to undergo elastic deformation, thereby achieving a snap-fit engagement between the snap-fitting protrusion and the elastic deformation structure.

In some embodiments of the present application, the snap-fitting protrusion includes a limiting flange, the cylindrical structure is configured such that when the limiting flange passes through the through hole, a size of the deformation gap expands and a diameter of the through hole increases, and after the limiting flange exits the through hole, the deformation gap resets and the diameter of the through hole resets, and the limiting flange is snap-fitted with a side of the elastic deformation structure facing the main body portion. Disposing the limiting flange, and utilizing the limiting flange to apply an external force to the elastic deformation structure when passing through the limiting hole, so that the elastic deformation structure undergoes elastic deformation by changing the size of the deformation gap, thereby allowing the limiting flange to pass through the through hole and then snap-fit with the side of the elastic deformation structure facing the main body portion after the elastic deformation structure restores its elastic deformation, which improves the convenience of assembly.

In some embodiments of the present application, an end of the elastic deformation structure facing the main body portion is spaced apart from the main body portion, the limiting flange is disposed between the elastic deformation structure and the main body portion, and a distance between the limiting flange and the main body portion is greater than or equal to zero. Specifically, the interval space between the end of the elastic deformation structure facing the main body portion and the main body portion is used to accommodate the limiting flange, and the distance between the limiting flange and the main body portion is set to be greater than or equal to zero, thereby reducing the impact of the snap-fitting protrusion on the main body portion, and further improving the safety performance of the battery cell.

In some embodiments of the present application, the limiting hole includes a first hole section and a second hole section, the first hole section and the second hole section are located on two opposite sides of the elastic deformation structure, and the first hole section is disposed closer to the main body portion than the second hole section, where a diameter of the first hole section is greater than a diameter of the second hole section. When the first end cover assembly is assembled with the separator, the snap-fitting protrusion is inserted in a direction from the second hole section to the first hole section. Setting the diameter of the first hole section to be greater than the diameter of the second hole section allows the first hole section to provide a larger deformation space for the elastic deformation structure in a radial direction of the first hole section when the snap-fitting protrusion passes through the elastic deformation structure, so that the elastic deformation structure undergoes elastic deformation.

In some embodiments of the present application, an arc-shaped transition is formed between the first hole section and the elastic deformation structure. By setting an arc-shaped transition between the first hole section and the elastic deformation structure, stress concentration at a connection position between the elastic deformation structure and the first hole section is reduced, thereby reducing the problem of breakage of the elastic deformation structure due to stress concentration.

In some embodiments of the present application, the snap-fitting protrusion includes a limiting flange, the limiting flange is snap-fitted with a side of the elastic deformation structure facing the main body portion, and the limiting flange is fully accommodated in the first hole section. After the first end cover assembly is assembled with the separator, the limiting flange is snap-fitted with the side of the elastic deformation structure facing the main body portion and is accommodated by the first hole section, thereby reducing the situation where the limiting flange protrudes from the limiting hole, thus further reducing the adverse effects on the main body portion due to the limiting flange protruding from the limiting hole.

In some embodiments of the present application, the through hole includes a straight hole section and a transition hole section, where the straight hole section and the transition hole section are connected, the straight hole section is disposed further away from the first end cover assembly than the transition hole section, one end of the transition hole section is connected to the straight hole section, another end of the transition hole section is connected to the second hole section, and along a direction from the first end cover assembly to the main body portion, a size of the transition hole section tends to decrease. During assembly, when the snap-fitting protrusion is inserted into the through hole, it first passes through the transition hole, then enters the straight hole section, and finally the limiting flange of the snap-fitting protrusion exits through the straight hole section. Disposing the transition hole section achieves guiding of the snap-fitting protrusion during insertion, improves the convenience of assembly, and effectively enhances the efficiency of assembly.

In some embodiments of the present application, the snap-fitting protrusion also includes a connecting post, the limiting flange is connected to the first end cover assembly through the connecting post, and at least a portion of the connecting post is accommodated in the through hole. Disposing the connecting post spaces the limiting flange apart from the first end cover assembly, so that the limiting flange can be effectively inserted into the through hole of the elastic deformation structure and exit through the through hole, thereby achieving a snap-fit engagement between the snap-fitting protrusion and the elastic deformation structure.

In some embodiments of the present application, the connecting post includes a first connecting portion, where the first connecting portion is connected to the limiting flange, a size of the first connecting portion along a first direction is less than or equal to a size of the straight hole section along the first direction, a size of the limiting flange along the first direction is greater than a size of the straight hole section along the first direction, and the first direction is perpendicular to a thickness direction of the separator. By setting the sizes of the first connecting portion and the limiting flange in the first direction, the elastic deformation structure can undergo elastic deformation when the limiting flange passes through the straight hole section and restore elastic deformation when the limiting flange exits, and the elastic deformation structure that has restored elastic deformation limits the limiting flange, reducing the situation where the limiting flange falls off in reverse, thereby improving the structural stability of the connection position.

In some embodiments of the present application, along the first direction, a size of the first connecting portion is greater than or equal to 0.8 millimeters and less than or equal to 3 millimeters. By setting the size of the first connecting portion in the first direction, the structural strength of the first connecting portion can be enhanced, and the situation of breakage of the first connecting portion under stress is reduced.

In some embodiments of the present application, the connecting post also includes a transition connecting portion, where the first connecting portion is connected to the first end cover assembly through the transition connecting portion, at least a portion of the transition connecting portion passes through the transition hole section, and along a direction from the first end cover assembly to the main body portion, a size of the transition connecting portion along the first direction tends to decrease. Providing the transition connecting portion can enhance the structural strength of the snap-fitting protrusion, and further reduce the occurrence of breakage of the snap-fitting protrusion during assembly.

In some embodiments of the present application, the connecting post also includes a second connecting portion, the transition connecting portion is connected to the first end cover assembly through the second connecting portion, and the second connecting portion is accommodated in the second hole section. By providing the second connecting portion and disposing the second connecting portion in the second hole section, the second hole section forms a limit for the second connecting portion in the first direction, reducing the movement of the snap-fitting protrusion relative to the separator in the first direction, and improving the assembly accuracy of the first end cover assembly.

In some embodiments of the present application, a first angle is formed between a hole wall of the transition hole section and a central axis of the through hole, a second angle is formed between an outer peripheral surface of the transition connecting portion and a central axis of the connecting post, and the first angle is less than or equal to the second angle, where a direction of the central axis of the through hole is consistent with a direction of the central axis of the connecting post. By providing the transition hole section and the transition connecting portion, the transition connecting portion can effectively adapt to the shape of the transition hole section, reducing the influence of manufacturing tolerances and other factors on assembly, and allowing the assembly operation to be effectively performed.

In some embodiments of the present application, the first angle is greater than or equal to 20 degrees and less than or equal to 75 degrees. By setting the first angle, the convenience of processing is improved while satisfying the guiding of the snap-fitting protrusion.

In some embodiments of the present application, the second inclination angle is greater than or equal to 20 degrees and less than or equal to 75 degrees. By setting the second angle, the transition connecting portion can effectively adapt to the structure of the transition hole section, thereby allowing effective assembly.

In some embodiments of the present application, along a thickness direction of the separator plate, a surface of the limiting flange tends to decrease. By setting the limiting flange, the side of the limiting flange facing away from the first end cover assembly is set to be narrowed, thereby facilitating the insertion of the limiting flange into the limiting hole, and further improving the convenience of assembly.

In some embodiments of the present application, the deformation gaps are provided in multiple, and the multiple deformation gaps are spaced apart along a circumferential direction of the limiting hole. By providing multiple deformation gaps, the elastic deformation capability of the elastic deformation structure is improved, and the convenience of the snap-fitting protrusion passing through the through hole is improved, thereby effectively enhancing the efficiency of assembly.

In some embodiments of the present application, the deformation gap is a linear structure or a curved structure. By setting the shape of the deformation gap, the deformation gap can be provided according to demand, thereby meeting production requirements.

In some embodiments of the present application, along a circumferential direction of the limiting hole, a size of the deformation gap is greater than or equal to 0.3 millimeters and less than or equal to 1.5 millimeters. By setting the size of the deformation gap in the circumferential direction of the limiting hole, the limiting hole has sufficient structural strength while having elastic deformation performance, reducing the occurrence of the snap-fitting protrusion falling off.

In some embodiments of the present application, the separator also includes a separator plate, and the limiting protrusion protrudes from a side of the separator facing the first end cover assembly. The separator plate is disposed between the first end cover assembly and the main body portion, and the separator plate is used to block the first end cover assembly from the main body portion, thereby improving the blocking performance.

In some embodiments of the present application, the separator also includes a side plate, the side plate is enclosed around a circumference of the separator plate and connected to the separator plate, and an end of the side plate facing the main body portion is flush with an end of the separator plate facing the main body portion. The side plate surrounds an outer side of the separator plate and protrudes from a side of the separator plate facing away from the main body portion. In this way, the separator plate and the side plate can jointly define an accommodating recess, and the accommodating recess can accommodate at least a portion of the tab so as to improve the compactness of the structure.

In some embodiments of the present application, the separator also includes a reinforcing structure, and the reinforcing structure is connected to a partition plate, the limiting protrusion, and the side plate, respectively. Providing the reinforcing structure enhances the connection strength between the limiting protrusion and the separator plate, and reduces the occurrence of breakage of the limiting protrusion relative to the separator plate.

In some embodiments of the present application, the reinforcing structures are provided in multiple, and the multiple reinforcing structures are spaced apart along a circumferential direction of the limiting protrusion. Providing multiple reinforcing structures further enhances the structural strength of the limiting protrusion, and further reduces the occurrence of breakage of the limiting protrusion relative to the separator plate.

In some embodiments of the present application, the first end cover assembly also includes a first end cover and an insulating member, where the first electrode lead-out member is disposed on the first end cover, the insulating member includes an insulating body and a snap-fitting protrusion, the insulating body is disposed on a side of the first end cover facing the main body portion, and the snap-fitting protrusion is fixed to a side of the insulating body facing the main body portion. The first end cover covers the first opening of the housing, the first electrode lead-out member on the first end cover is electrically connected to the tab, and the snap-fitting protrusion of the insulating member is snap-fitted with the elastic deformation structure in the limiting hole of the separator. By disposing the first end cover assembly, connection of the first end cover assembly, the separator, and the electrode assembly is facilitated.

In some embodiments of the present application, the housing also has a second opening opposite to the first opening, and the battery cell also includes a second end cover assembly, where the second end cover assembly is configured to cover the second opening. The first end cover assembly and the second end cover assembly are configured to cover the first opening and the second opening at two ends of the housing, respectively, thereby facilitating sealing of the housing.

A second aspect of the present application proposes a battery, where the battery includes the battery cell as described above.

When assembling the battery cell in the battery, the separator is disposed in the housing, then the snap-fitting protrusion of the first end cover assembly is inserted into the limiting hole of the limiting protrusion, and as the snap-fitting protrusion is gradually inserted, the snap-fitting protrusion enters the through hole of the elastic deformation structure. When the snap-fitting protrusion passes through the through hole, the elastic deformation structure undergoes elastic deformation, so that the snap-fitting protrusion can be snap-fitted with the elastic deformation structure. Providing the elastic deformation structure on the separator eliminates the need for a deformation structure on the snap-fitting protrusion to meet the assembly requirements, thereby enhancing the structural strength of the snap-fitting protrusion and reducing the occurrence of breakage of the snap-fitting protrusion during assembly.

A third aspect of the present application provides an electric device, where the electric device includes the battery as described above.

In the electric device, when assembling the battery cell in the battery, the separator is disposed in the housing, then the snap-fitting protrusion of the first end cover assembly is inserted into the limiting hole of the limiting protrusion, and as the snap-fitting protrusion is gradually inserted, the snap-fitting protrusion enters the through hole of the elastic deformation structure. When the snap-fitting protrusion passes through the through hole, the elastic deformation structure undergoes elastic deformation, so that the snap-fitting protrusion can be snap-fitted with the elastic deformation structure. Providing the elastic deformation structure on the separator eliminates the need for a deformation structure on the snap-fitting protrusion to meet the assembly requirements, thereby enhancing the structural strength of the snap-fitting protrusion and reducing the occurrence of breakage of the snap-fitting protrusion during assembly.

The foregoing descriptions are merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

FIG. 1 schematically shows a schematic structural diagram of a vehicle according to an embodiment of the present application;
FIG. 2 schematically shows a schematic structural diagram of a battery according to an embodiment of the present application;
FIG. 3 schematically shows a schematic structural exploded view of a battery cell according to an embodiment of the present application;
FIG. 4 is a cross-sectional view of the battery cell shown in FIG. 3 in an assembled state (showing partial structures);
FIG. 5 is an enlarged schematic structural diagram of the battery cell shown in FIG. 4 at position A;
FIG. 6 is a schematic structural diagram of the support member shown in FIG. 3;
FIG. 7 is a cross-sectional view of portion B-B of the support member shown in FIG. 6;
FIG. 8 is an enlarged schematic structural diagram of the support member shown in FIG. 7 at position C;
FIG. 9 is a schematic structural diagram of the support member shown in FIG. 6 from another perspective;
FIG. 10 is a schematic structural diagram of the first cover plate shown in FIG. 3 (showing an electrode terminal);
FIG. 11 is a schematic structural diagram of the first cover plate shown in FIG. 10 from another perspective; and
FIG. 12 is an enlarged schematic structural diagram of the first cover plate shown in FIG. 11 at position D.

Reference signs are described as follows:
1000. vehicle;
100. battery; 200. controller; 300. motor;
110. battery module;
10. battery cell;
11. housing;
111. first opening;
12. separator;
121. limiting hole; 1211. first hole section; 1212. second hole section; 122. via hole; 123. limiting protrusion; 1231. through hole; 12311. straight hole section; 12312. transition hole section; 1232. deformation gap; 124. separator plate; 125. side plate; 126. reinforcing structure;
13. first end cover assembly;
131. snap-fitting protrusion; 1311. limiting flange; 1312. connecting post; 13121. first connecting portion; 13122. transition connecting portion; 13123. second connecting portion; 132. liquid injection hole; 133. baffle; 134. first end cover; 135. insulating member;
14. electrode assembly;
141. main body portion; 142. tab;
15. second end cover assembly;
16. insulating film;
17. first electrode lead-out member;
120. box;
1201. first portion; 1202. second portion;
a. thickness direction of the separator; b. first direction; a1. first angle; a2. second angle; m. preset gap; d1. first diameter; d2. second diameter; d3. third diameter; and p. width dimension.

### DESCRIPTION OF EMBODIMENTS

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the description of the embodiments of the present application, the technical terms "first", "second", and the like are merely intended to distinguish between different objects, and shall not be understood as any indication or implication of relative importance or any implicit indication of the number, particular sequence or primary-secondary relationship of the technical features indicated. In the description of embodiments of the present application, "multiple" means at least two unless otherwise specifically stated.

In this specification, reference to "embodiment" means that specific features, structures, or characteristics described with reference to the embodiment may be included in at least one embodiment of the present application. The word "embodiment" appearing in various positions in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the descriptions of the embodiments of the present application, the term "multiple" means more than two (inclusive). Similarly, "multiple groups" means more than two (inclusive) groups, and "multiple pieces" means more than two (inclusive) pieces.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the descriptions of the embodiments of the present application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of the present application as suitable to specific situations.

Currently, from the perspective of market development, application of batteries is being more extensive. Batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of batteries, market demands for traction batteries are also increasing.

In related art, a battery includes at least one battery cell, and the battery cell includes a housing, a bracket, and a cover plate, where the bracket is disposed in the housing and is provided with a locking hole, the cover plate is provided with a snap-fit member, the snap-fit member is a protruding member, and a deformation groove is formed on the protruding member, so that the protruding member can be snapped into the locking hole when the deformation groove undergoes elastic deformation. However, the deformation groove weakens the strength of the protruding member, making the protruding member prone to breakage during assembly.

In the present application, the battery cell includes a housing, a first end cover assembly, an electrode assembly, and a separator. The housing includes a first opening, and the first end cover assembly is configured to cover the first opening, the first end cover assembly includes a snap-fitting protrusion and a first electrode lead-out member. The electrode assembly is accommodated in the housing, and the electrode assembly includes a main body portion and a tab extending from the main body portion. At least part of the separator is disposed between the first electrode lead-out member and the main body portion, and the tab passes through the separator and is electrically connected to the first electrode lead-out member. The separator includes a limiting protrusion, a limiting hole is formed on the limiting protrusion, the limiting hole is formed along a thickness direction of the separator, an elastic deformation structure is disposed on a hole wall of the limiting hole, and the snap-fitting protrusion is snap-fitted with the elastic deformation structure. The elastic deformation structure includes a through hole, the through hole is in communication with the limiting hole, and the elastic deformation structure is configured to undergo elastic deformation when the snap-fitting protrusion is inserted into the limiting hole and passes through the through hole. Specifically, during assembly, the separator is disposed in the housing, then the snap-fitting protrusion of the first end cover assembly is inserted into the limiting hole of the limiting protrusion, and as the snap-fitting protrusion is gradually inserted, the snap-fitting protrusion enters the through hole of the elastic deformation structure. When the snap-fitting protrusion passes through the through hole, the elastic deformation structure undergoes elastic deformation, so that the snap-fitting protrusion can be snap-fitted with the elastic deformation structure. Providing the elastic deformation structure on the separator eliminates the need for a deformation structure on the snap-fitting protrusion to meet the assembly requirements, thereby enhancing the structural strength of the snap-fitting protrusion and reducing the occurrence of breakage of the snap-fitting protrusion during assembly.

The battery involved in the embodiments of the present application may be used without limitation in electric apparatuses such as vehicles, ships, and aircrafts. The battery cell, battery, and the like involved in the present application may be used to constitute a power supply system of that electric apparatus.

In addition, an electric device that uses a battery as power sources may be, but is not limited to, a mobile phone, a tablet, a laptop computer, an electric toy, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

It should be understood that the technical solutions described in the embodiments of the present application are not only applicable to the devices described above, but also applicable to all devices using batteries. However, for brevity of description, electric vehicles are used as an example for description in the following embodiments.

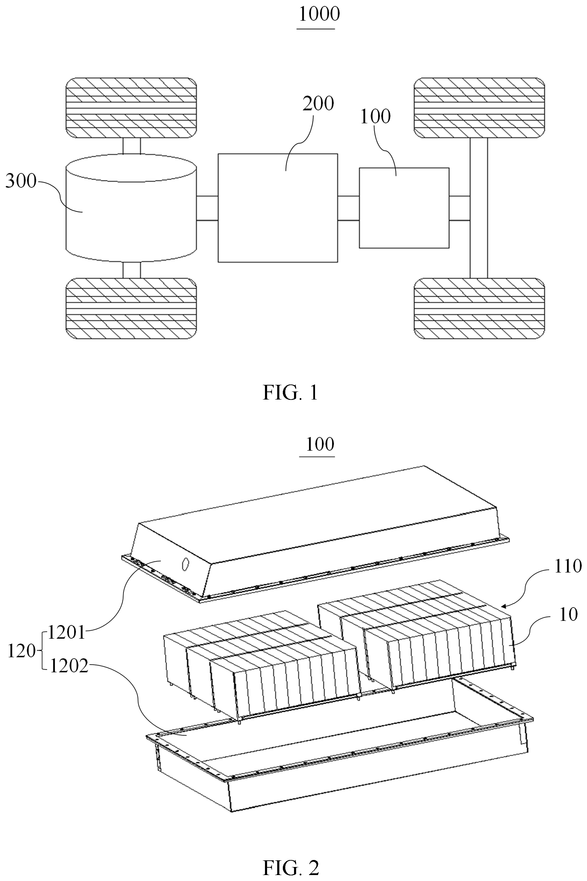

For example, as shown in FIG. 1, it is a schematic structural diagram of a vehicle according to an embodiment of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. A motor 300, a controller 200, and a battery 100 may be disposed inside the vehicle 1000, and the controller 200 is configured to control the battery 100 to supply power to the motor 300. For example, the battery 100 may be disposed at the bottom, front, or rear of the vehicle 1000. The battery 100 may be configured to supply power to the vehicle 1000. For example, the battery 100 may be used as an operational power source for the vehicle 1000 which is configured for a circuit system of the vehicle 1000, for example, to satisfy power needs of start, navigation, and running of the vehicle 1000. In another embodiment of the present application, the battery 100 can be used as not only the operational power source for the vehicle 1000 but also a driving power source for the vehicle 1000, replacing or partially replacing fossil fuel or natural gas to provide driving traction for the vehicle 1000.

As shown in FIG. 2, the battery 100 may include multiple battery modules 110 and a box 120, and the multiple battery modules 110 are accommodated inside the box 120.

In order to meet different requirements for power use, the battery module 110 may include multiple battery cells 10 and a busbar, where the battery cell 10 is a smallest unit constituting a battery module 110. The busbar is configured to implement an electrical connection among multiple battery cells 10 for application in various application scenarios, for example, a parallel connection, a series connection, or a series-parallel connection. Specifically, the busbar may implement the electrical connection between the battery cells 10 by connecting electrode lead-out members of a battery cell 2. The battery cell 10 may include, but is not limited to, a lithium-ion battery 100, a sodium-ion battery 100, a magnesium-ion battery 100, or the like. In addition, the shape of the battery cell 10 includes, but is not limited to, cylindrical, flat, cuboid, or another shape.

The box 120 is configured to accommodate the battery module 110 to reduce the influence of liquids or other foreign matter on charging or discharging of the battery cell 10. The box 120 may be a simple three-dimensional structure such as a rectangular, cylindrical, or spherical structure or may be a complex three-dimensional structure combining simple three-dimensional structures such as rectangular, cylindrical, or spherical structures. The box 120 may be made of an alloy material such as an aluminum alloy or iron alloy, a polymer material such as polycarbonate or polyisocyanurate foam, or a composite material produced from materials such as glass fiber and epoxy resin.

As shown in FIG. 2, the box 120 may include a first portion 1201 and a second portion 1202. The first portion 1201 and the second portion 1202 are fit together to jointly define an accommodating space for accommodating the battery module 110. The second portion 1202 may be a hollow structure with an opening at one end, the first portion 1201 may be a plate-shaped structure, and the first portion 1201 covers the opening side of the second portion 1202 so that the first portion 1201 and the second portion 1202 jointly define a space for accommodating the battery module 110. Alternatively, both the first portion 1201 and the second portion 1202 may be hollow structures with an opening at one side, and the opening side of the first portion 1201 is engaged with the opening side of the second portion 1202.

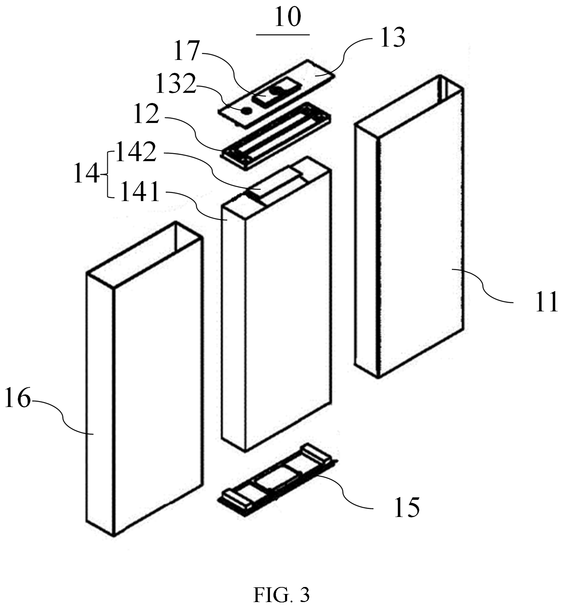

In some embodiments of the present application, as shown in FIGs. 3 to 12, a battery cell 10 is proposed. The battery cell 10 includes a housing 11, a first end cover assembly 13, an electrode assembly 14, and a separator 12. The housing 11 includes a first opening, the first end cover assembly 13 is configured to cover the first opening, the first end cover assembly 13 includes a snap-fitting protrusion 131 and a first electrode lead-out member 17, the electrode assembly 14 is accommodated in the housing 11, the electrode assembly 14 includes a main body portion 141 and a tab 142 extending from the main body portion 141, at least part of the separator 12 is disposed between the first electrode lead-out member 17 and the main body portion 141, the tab 142 passes through the separator 12 and is electrically connected to the first electrode lead-out member 17, the separator 12 includes a limiting protrusion 123, a limiting hole 121 is formed on the limiting protrusion 123, the limiting hole 121 is formed along a thickness direction a of the separator 12, an elastic deformation structure is disposed on a hole wall of the limiting hole 121, and the snap-fitting protrusion 131 is snap-fitted with the elastic deformation structure. The elastic deformation structure includes a through hole 1231, the through hole 1231 is in communication with the limiting hole 121, and the elastic deformation structure is configured to undergo elastic deformation when the snap-fitting protrusion 131 is inserted into the limiting hole 121 and passes through the through hole 1231.

As shown in FIG. 3, the housing 11 may be a hollow structure with an opening at one side, or a hollow structure with openings on two sides. For example, the housing 11 is provided with one opening, and the opening is a first opening. For another example, the housing 11 may also be provided with openings other than the first opening.

The housing 11 is configured to accommodate the electrode assembly 14, where the shape of the housing 11 may be determined according to the shape of one or more electrode assemblies 14 after combination. For example, the housing 11 is a hollow cuboid. The embodiments of the present application are not limited thereto. The housing 11 may also be a hollow cube, cylinder, or other shapes.

The material of the housing 11 may be various, for example, the material of the housing 11 may be metal or plastic. As some examples, the material of the housing 11 may be copper, iron, aluminum, steel, aluminum alloy, or the like.

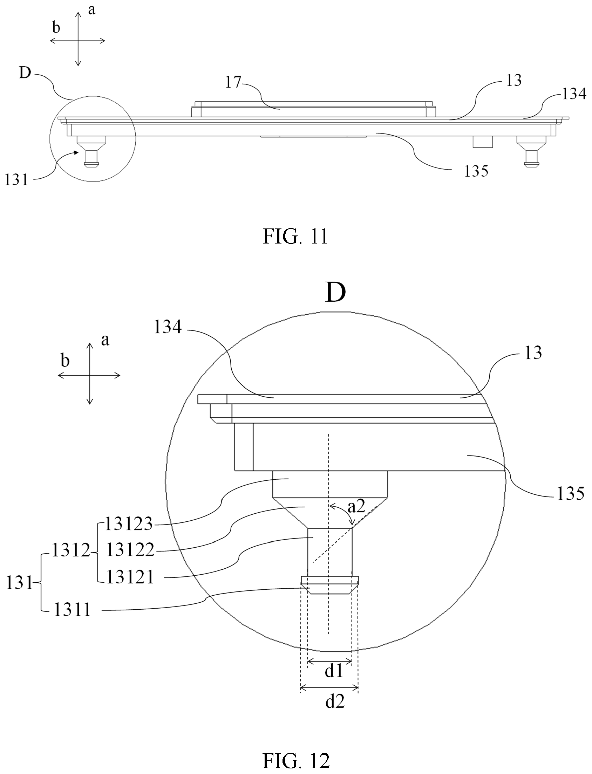

As shown in FIGs. 3 and 11, the first end cover assembly 13 includes a snap-fitting protrusion 131 and a first electrode lead-out member 17. The first electrode lead-out member 17 is configured to electrically connect the electrode assembly 14 to an external circuit of the battery cell 10, so as to achieve charging and discharging of the electrode assembly 14. As an example, at least part of the first electrode lead-out member 17 is exposed to the outside of the battery cell 10, so as to facilitate connection with a busbar, and then lead out the electric energy generated by the electrode assembly 14.

The electrode assembly 14 is composed of a positive electrode sheet, a negative electrode sheet, and a separator film. The battery cell 10 works mainly depending on migration of metal ions between the positive electrode sheet and the negative electrode sheet. The positive electrode sheet includes a positive electrode current collector and a positive electrode active substance layer. The positive electrode active substance layer is applied on a surface of the positive electrode current collector. An electrode current collector uncoated with the positive electrode active substance layer bulges out of an electrode current collector coated with the positive electrode active substance layer, and the electrode current collector uncoated with the positive electrode active substance layer is used as a positive electrode tab 142. A lithium-ion battery 100 is used as an example, for which, the positive electrode current collector may be made of aluminum, and the positive electrode active substance may be lithium cobaltate, lithium iron phosphate, ternary lithium, lithium manganate, or the like. The negative electrode sheet includes a negative electrode current collector and a negative electrode active substance layer. The negative electrode active substance layer is applied on a surface of the negative electrode current collector. An electrode current collector uncoated with the negative electrode active substance layer bulges out of an electrode current collector coated with the negative electrode active substance layer, and the electrode current collector uncoated with the negative electrode active substance layer is used as a negative electrode tab 142. The negative electrode current collector may be made of copper, and the negative electrode active substance may be carbon, silicon, or the like. In order to ensure that no fusing occurs when a large current passes, there are multiple positive electrode tabs 142 that are stacked together, and there are multiple negative electrode tabs 142 that are stacked together. The material of the separator film may be made of polypropylene (polypropylene, PP), polyethylene (polyethylene, PE), or the like. In addition, the electrode assembly 14 may be a wound structure or a laminated structure. However, the embodiments of the present application are not limited thereto.

In the electrode assembly 14, the tab 142 may be directly connected to the first electrode lead-out member 17, or may be indirectly connected to the first electrode lead-out member 17 via other conductive structures.

The tabs 142 may be provided in multiple. The multiple tabs 142 include a positive electrode tab 142 and a negative electrode tab 142. The positive electrode tab 142 and the negative electrode tab 142 may be led out from the same end of the main body portion 141, or may be led out from two opposite ends of the main body portion 141 along a thickness direction a of the first end cover assembly 13, respectively.

The tab 142 may include multiple tab 142 layers, and the multiple tab 142 layers are stacked together to form the tab 142. The tab 142 may include at least two portions, one portion is located between the main body portion 141 and the separator 12, and the other portion is located between a separator component and the first electrode lead-out member 17.

The separator 12 may insulate and isolate at least a portion of the tab 142 from an end face of the main body portion 141, thereby lowering a risk of the tab 142 inserting into the main body portion 141 when the battery cell 10 is subjected to external impacts, vibrations, and other influences, which can lower a risk of short circuit of the battery cell 10, and is conducive to improving reliability of the battery cell 10.

The separator 12 may be partially disposed between the first electrode lead-out member 17 and the main body portion 141, or may be entirely disposed between the first electrode lead-out member 17 and the main body portion 141.

The separator 12 may be an integral structure or a split structure. As an example, the separator 12 is formed by connecting multiple independently formed parts. As another example, the separator 12 is integrally formed by stamping.

In the present application, the first opening is formed on the housing 11 and is in communication with an interior of the housing 11. Internal components of the battery cell 10 such as the separator 12 may be installed through the first opening. When the first end cover assembly 13 is assembled on the housing 11, the first end cover assembly 13 closes the first opening, so as to isolate the interior from exterior of the battery cell 10 at the position of the first opening. A first sealing structure may be disposed at a joint position between the first end cover assembly 13 and the first opening, and the first sealing structure includes but is not limited to a sealing ring or a sealant.

In the present application, the limiting protrusion 123 is disposed on the separator 12, and the limiting protrusion 123 protrudes relative to a surface on which the limiting protrusion 123 is provided. The limiting hole 121 is formed on the limiting protrusion 123, and a forming direction (depth direction) of the limiting hole 121 is along a thickness direction a (a direction of arrangement of the first end cover assembly 13 and the main body portion 141 is consistent with the thickness direction a of the separator 12) of the separator 12 or is disposed at an acute angle to a thickness direction a of the separator 12.

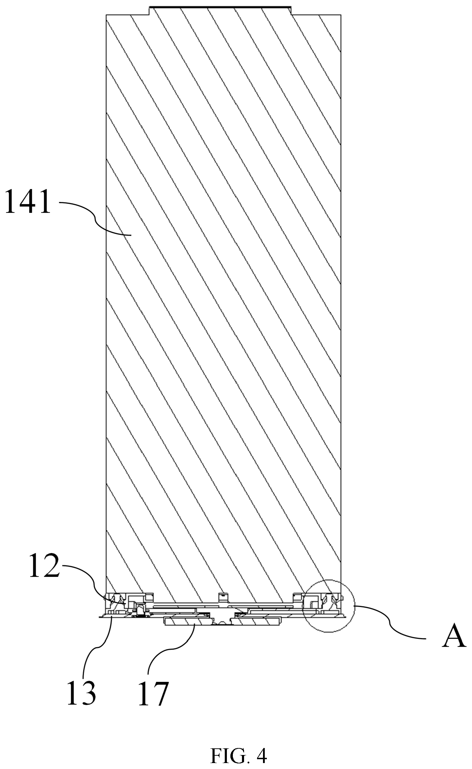

As shown in FIGs. 4 to 9, the elastic deformation structure is disposed in the limiting hole 121 of the limiting protrusion 123, and the elastic deformation structure is connected to a hole wall of the limiting hole 121. Along a radial direction (the radial direction of the limiting hole 121 is consistent with a first direction b, where the first direction b is perpendicular to the thickness direction a of the separator 12) of the limiting hole 121, the elastic deformation structure protrudes relative to the hole wall of the limiting hole 121, a through hole 1231 is formed on the elastic deformation structure, and the elastic deformation structure can undergo elastic deformation along the radial direction of the limiting hole 121 when the snap-fitting protrusion 131 is inserted into the through hole 1231.

In the present application, when the battery cell 10 is assembled, the separator 12 is disposed in the housing 11, then the snap-fitting protrusion 131 of the first end cover assembly 13 is inserted into the limiting hole 121 of the limiting protrusion 123, and as the snap-fitting protrusion 131 is gradually inserted, the snap-fitting protrusion 131 enters the through hole 1231 of the elastic deformation structure. When the snap-fitting protrusion 131 passes through the through hole 1231, the elastic deformation structure undergoes elastic deformation, so that the snap-fitting protrusion 131 can be snap-fitted with the elastic deformation structure. Providing the elastic deformation structure on the separator 12 eliminates the need for a deformation structure on the snap-fitting protrusion 131 to meet the assembly requirements, thereby enhancing the structural strength of the snap-fitting protrusion 131 and reducing the occurrence of breakage of the snap-fitting protrusion 131 during assembly.

It should be understood that, in the present application, the snap-fitting protrusion 131 is snap-fitted with the elastic deformation structure, where the snap-fit engagement means that the snap-fitting protrusion 131 and the elastic deformation structure are engaged by means of snap-fitting, and the snap-fitting protrusion 131 and the elastic deformation structure can move relative to each other (such as rotation or movement).

It should be noted that in the present application, the number of snap-fitting protrusions 131 may be one, two, three, four, five, six, seven, eight, or the like. When the snap-fitting protrusions 131 are provided in multiple (two or more), the multiple snap-fitting protrusions 131 are dispersedly disposed on the same side of the first end cover assembly 13 facing the main body portion 141. Providing multiple snap-fitting protrusions 131 can enhance the fixing strength and stability of the first end cover assembly 13.

In addition, the number of limiting protrusions 123 is consistent with the number of snap-fitting protrusions 131, and each snap-fitting protrusion 131 is disposed corresponding to one limiting protrusion 123.

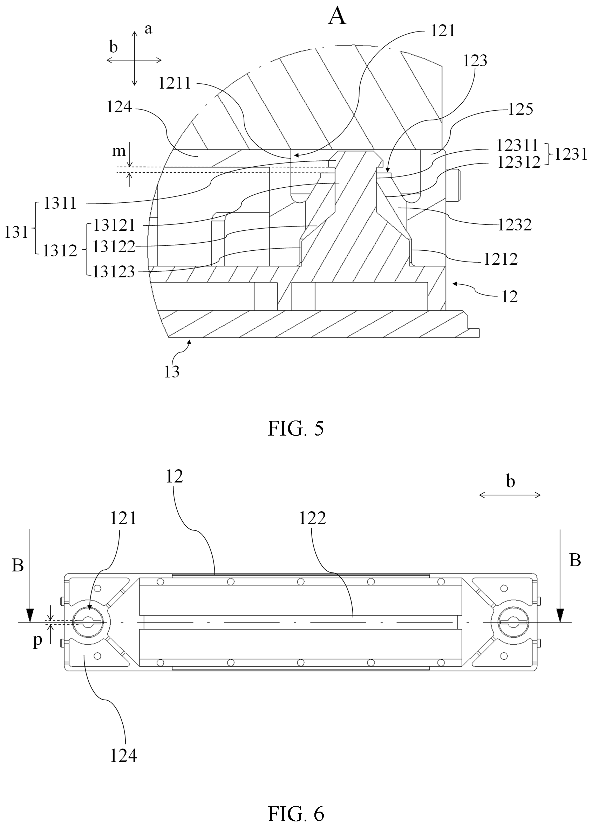

In some embodiments of the present application, as shown in FIGs. 5 to 9, the elastic deformation structure is a cylindrical structure, an interior of the cylindrical structure forms the through hole 1231, a deformation gap 1232 is formed on the cylindrical structure, and a gap is disposed between an outer peripheral surface of the elastic deformation structure and the hole wall of the limiting hole 121.

Specifically, the cylindrical structure is a hollow structure with openings at two ends, one axial end of the cylindrical structure is connected to the hole wall of the limiting hole 121 (the connection method includes but is not limited to bonding, welding, connection via a connecting member, or integral molding), and another axial end of the cylindrical structure is spaced apart from the hole wall of the limiting hole 121, so that a gap is disposed between the cylindrical elastic deformation structure and the hole wall of the limiting hole 121.

The deformation gap 1232 is formed on a side wall of the cylindrical structure, the deformation gap 1232 penetrates an interior and an exterior of the cylindrical structure, and at the same time, along an axial direction of the cylindrical structure, the deformation gap 1232 at least penetrates through an end of the cylindrical structure facing the main body portion 141.

During assembly, the separator 12 is disposed in the housing 11 from the first opening of the housing 11 and abuts against the main body portion 141 of the electrode assembly 14, and at the same time, the tab 142 passes through the separator 12. Then, a side of the first end cover assembly 13 having the snap-fitting protrusion 131 is disposed facing the separator 12, the tab 142 is electrically connected to the first electrode lead-out member 17 on the first end cover assembly 13, and then the snap-fitting protrusion 131 is inserted into the limiting hole 121. When the snap-fitting protrusion 131 is inserted into the through hole 1231 of the elastic deformation structure, the elastic deformation structure undergoes elastic deformation (the elastic deformation occurs in a direction from a radially inner side of the limiting hole 121 to a radially outer side of the limiting hole 121) along a radial direction (the radial direction of the limiting hole 121 is consistent with the first direction b, where the first direction b is perpendicular to the thickness direction a of the separator 12) of the limiting hole 121. At this time, the deformation gap 1232 increases, so that a hole diameter of the through hole 1231 increases, thereby meeting the requirement for the snap-fitting protrusion 131 to pass through.

Providing the deformation gap 1232 enables the elastic deformation structure to have deformation capability, thereby meeting the deformation requirement when the snap-fitting protrusion 131 passes through the through hole 1231. At the same time, disposing a gap between the elastic deformation structure and the hole wall of the limiting hole 121 provides deformation space for the elastic deformation structure to undergo elastic deformation, thereby effectively meeting the requirement for the snap-fitting protrusion 131 to pass through the through hole 1231 of the elastic deformation structure, and effectively achieving a snap-fit engagement between the snap-fitting protrusion 131 and the elastic deformation structure.

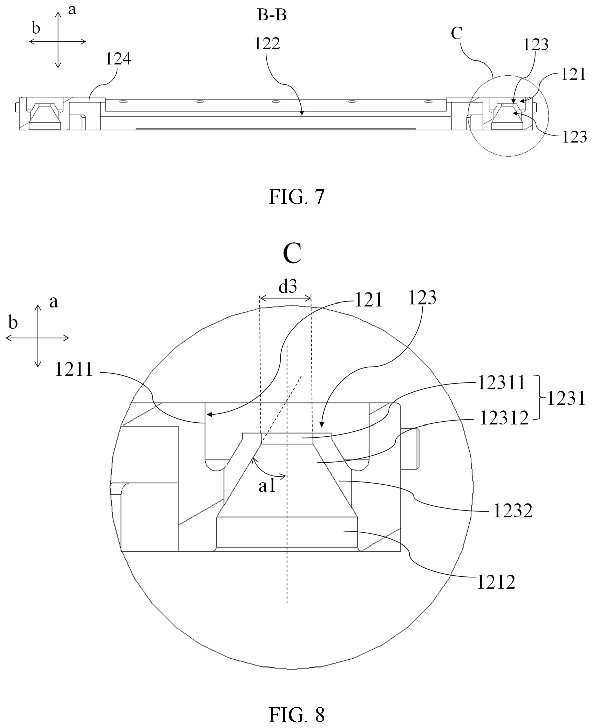

In some embodiments of the present application, as shown in FIGs. 5 and 8, the gap between the outer peripheral surface of the elastic deformation structure and the hole wall of the limiting hole 121 tends to increase along a direction from the first end cover assembly 13 to the main body portion 141.

Specifically, the elastic deformation structure is a cylindrical structure, the cylindrical structure is coaxially disposed with the limiting hole 121, and an axial direction of the cylindrical structure includes a first end and a second end, where the first end is disposed facing the first end cover assembly 13 and is connected to the hole wall of the limiting hole 121, and the second end is disposed facing away from the first end cover assembly 13 and is spaced apart from the hole wall of the limiting hole 121.

An outer peripheral surface of the elastic deformation structure is disposed between the first end and the second end. Along a radial direction (the radial direction of the limiting hole 121 is consistent with the first direction b, where the first direction b is perpendicular to the thickness direction a of the separator 12) of the limiting hole 121, a spacing distance is provided between the outer peripheral surface of the elastic deformation structure and the hole wall of the limiting hole 121, and the spacing distance tends to increase along an axial direction (a direction from the first end cover assembly 13 to the main body portion 141) of the cylindrical structure, where the increase may be continuous or discontinuous.

In the present application, the cylindrical elastic deformation structure is a truncated structure (the spacing distance between the outer peripheral surface of the elastic deformation structure and the hole wall of the limiting hole 121 gradually and continuously increases from the first end to the second end), where the first end is a large end of the truncated structure, the second end is a small end of the truncated structure, and a shape of the through hole 1231 is consistent with the shape of the cylindrical structure, that is, a diameter of the through hole 1231 at the first end is greater than a diameter at the second end. When the snap-fitting protrusion 131 passes through the through hole 1231, as the snap-fitting protrusion 131 is continuously inserted, the snap-fitting protrusion 131 forms an extrusion on an inner wall of the through hole 1231. Under the action of the extrusion force, the elastic deformation structure (the main body other than the first end) undergoes elastic deformation along a radial direction (the radial direction of the limiting hole 121 is consistent with the first direction b, where the first direction b is perpendicular to the thickness direction a of the separator 12) of the limiting hole 121, thereby increasing a hole diameter of the through hole 1231 to meet the requirement for the snap-fitting protrusion 131 to pass through.

By disposing the gap between the elastic deformation structure and the hole wall of the limiting hole 121, the elastic deformation structure has sufficient deformation space to meet the requirement for the snap-fitting protrusion 131 to pass through, thereby effectively achieving a snap-fit engagement between the snap-fitting protrusion 131 and the elastic deformation structure.

In some embodiments of the present application, as shown in FIGs. 5 and 8, the cylindrical structure extends obliquely along a direction from the first end cover assembly 13 to the main body portion 141.

Specifically, the cylindrical elastic deformation structure includes an axial first end and a second end, where the first end is disposed facing the first end cover assembly 13 and is connected to a hole wall of the limiting hole 121, and the second end is disposed facing away from the first end cover assembly 13 and is not connected to the hole wall of the limiting hole 121.

The cylindrical structure extending obliquely along the direction from the first end cover assembly 13 to the main body portion 141 means that the second end of a side wall of the cylindrical structure is obliquely disposed from the hole wall of the limiting hole 121 to a direction of a central axis of the limiting hole 121, so that a distance between the second end and the hole wall of the limiting hole 121 is greater than a distance between the first end and the hole wall of the limiting hole 121, thereby forming the cylindrical structure into a truncated structure (the first end is a small end, and the second end is a large end).

In the direction from the first end cover assembly 13 to the main body portion 141, the cylindrical elastic deformation structure is disposed such that the cylindrical elastic deformation structure has a large end and a small end, where an end facing the first end cover assembly 13 is the large end (first end), and an end facing the main body portion 141 is the small end (second end). The snap-fitting protrusion 131 enters the through hole 1231 from the large end, and as the snap-fitting protrusion 131 is continuously inserted, the elastic deformation structure is effectively driven to undergo elastic deformation, thereby achieving a snap-fit engagement between the snap-fitting protrusion 131 and the elastic deformation structure.

In some embodiments of the present application, as shown in FIGs. 5, 10, and 12, the snap-fitting protrusion 131 includes a limiting flange 1311, the cylindrical structure is configured such that when the limiting flange 1311 passes through the through hole 1231, a size of the deformation gap 1232 expands and a diameter of the through hole 1231 increases, and after the limiting flange 1311 exits the through hole 1231, the deformation gap 1232 resets and the diameter of the through hole 1231 resets, and the limiting flange 1311 is snap-fitted with a side of the elastic deformation structure facing the main body portion 141.

Specifically, in the present application, the snap-fitting protrusion 131 includes a limiting flange 1311, and the limiting flange 1311 is spaced apart from the first end cover assembly 13. When the first end cover assembly 13 is installed, the limiting flange 1311 is snap-fitted with a side of the elastic deformation structure facing the main body portion 141, and the limiting flange 1311 can form a limit for the first end cover assembly 13 in the thickness direction a of the separator 12, thereby maintaining the first end cover assembly 13 in an assembled state.

A maximum diameter of the limiting flange 1311 is greater than a minimum diameter of the through hole 1231. When the first end cover assembly 13 is assembled, the limiting flange 1311 is inserted into the limiting hole 121, and moves along the limiting hole 121 in a direction toward the elastic deformation structure. When the limiting flange 1311 is inserted into the through hole 1231, as the limiting flange 1311 is continuously inserted, when the limiting flange 1311 passes through a position (a position where the diameter of the limiting flange 1311 is greater than the diameter of the through hole 1231) with a small diameter, the limiting flange 1311 forms an extrusion on the hole wall of the through hole 1231. Under the driving force of the extrusion force, the elastic deformation structure undergoes elastic deformation (the deformation gap 1232 increases), so that the through hole 1231 is opened and the diameter is increased to meet the requirement for the limiting flange 1311 to pass through. After the limiting flange 1311 exits through the through hole 1231, the elastic deformation structure resets, and the opened through hole 1231 restores to its original diameter. The diameter of the reset through hole 1231 cannot allow the limiting flange 1311 to pass in reverse from the main body portion 141 to the first end cover assembly 13, so that the limiting flange 1311 is limited between the elastic deformation structure and the main body portion 141.

Disposing the limiting flange 1311, and utilizing the limiting flange 1311 to apply an external force to the elastic deformation structure when passing through the limiting hole 121, so that the elastic deformation structure undergoes elastic deformation by changing the size of the deformation gap 1232, thereby allowing the limiting flange 1311 to pass through the through hole 1231 and then snap-fit with a side of the elastic deformation structure facing the main body portion 141 after the elastic deformation structure restores its elastic deformation, which improves the convenience of assembly.

In addition, in the present application, as shown in FIG. 5, the limiting flange 1311 is disposed between the elastic deformation structure and the main body portion 141, and a preset gap m is provided between the limiting flange 1311 and an end of the elastic deformation structure facing the main body portion 141, where the preset gap m is greater than or equal to 0.

When the preset gap m is 0, the limiting flange 1311 abuts against an end of the elastic deformation structure facing the main body portion 141, thereby achieving a snap-fit fixation between the snap-fitting protrusion 131 and the elastic deformation structure in the thickness direction a of the separator 12. When the preset gap m is greater than 0, the limiting flange 1311 is spaced apart from an end of the elastic deformation structure facing the main body portion 141, where the preset gap m may be specifically 0.05 millimeters, 0.1 millimeters, 0.15 millimeters, 0.2 millimeters, 0.25 millimeters, 0.3 millimeters, 0.35 millimeters, 0.4 millimeters, 0.45 millimeters, 0.5 millimeters, or the like. By spacing the limiting flange 1311 from an end of the elastic deformation structure facing the main body portion 141, adverse effects (such as incomplete assembly, and the like) of manufacturing tolerances and other factors on assembly are reduced, effectively meeting assembly requirements.

In some embodiments of the present application, as shown in FIG. 5, an end of the elastic deformation structure facing the main body portion 141 is spaced apart from the main body portion 141, the limiting flange 1311 is disposed between the elastic deformation structure and the main body portion 141, and a distance between the limiting flange 1311 and the main body portion 141 is greater than or equal to zero.

Specifically, the elastic deformation structure is disposed in the limiting hole 121 of the limiting protrusion 123. Along an axial direction of the limiting hole 121, an end of the elastic deformation structure facing the first end cover assembly 13 is connected to the hole wall of the limiting hole 121, and the end of the elastic deformation structure facing the main body portion 141 is spaced apart from the main body portion 141. After the snap-fitting protrusion 131 with the limiting flange 1311 exits through the through hole 1231 on the elastic deformation structure, the limiting flange 1311 is disposed in the limiting hole 121 in a space between the elastic deformation structure and the main body portion 141, and a distance between the limiting flange 1311 and the main body portion 141 is greater than or equal to zero.

Utilizing the interval space between the end of the elastic deformation structure facing the main body portion 141 and the main body portion 141 to accommodate the limiting flange 1311, and setting the distance between the limiting flange 1311 and the main body portion 141 to be greater than or equal to zero, the impact of the snap-fitting protrusion 131 on the main body portion 141 is reduced, further improving the safety performance of the battery cell 10.

In some embodiments of the present application, as shown in FIGs. 5 and 8, the limiting hole 121 includes a first hole section 1211 and a second hole section 1212, the first hole section 1211 and the second hole section 1212 are located on two opposite sides of the elastic deformation structure, and the first hole section 1211 is disposed closer to the main body portion 141 than the second hole section 1212, where a diameter of the first hole section 1211 is greater than a diameter of the second hole section 1212.

Specifically, the elastic deformation structure is a cylindrical structure, where the cylindrical elastic deformation structure is disposed in the limiting hole 121 of the limiting protrusion 123 and is coaxially disposed with the limiting hole 121, an end of the cylindrical structure facing the first end cover assembly 13 is connected to the hole wall of the limiting hole 121, an end of the cylindrical structure facing the main body portion 141 is spaced apart from a port of the limiting hole 121 facing the main body portion 141, and at the same time, an end of the cylindrical structure facing the main body portion 141 is spaced apart from the hole wall of the limiting hole 121.

The elastic deformation structure divides the through hole 1231 into two sections, that is, the first hole section 1211 and the second hole section 1212, where the first hole section 1211 is located on a side of the elastic deformation structure facing the main body portion 141, the second hole section 1212 is located on a side of the elastic deformation structure facing the first end cover assembly 13, and a diameter of the first hole section 1211 is set to be greater than a diameter of the second hole section 1212.

When the first end cover assembly 13 is assembled with the separator 12, the snap-fitting protrusion 131 is inserted in a direction from the second hole section 1212 to the first hole section 1211. Setting the diameter of the first hole section 1211 to be greater than the diameter of the second hole section 1212 allows the first hole section 1211 to provide a larger deformation space for the elastic deformation structure in a radial direction of the first hole section 1211 when the snap-fitting protrusion 131 passes through the elastic deformation structure, so that the elastic deformation structure undergoes elastic deformation.

In addition, setting the diameter of the first hole section 1211 to be greater than the diameter of the second hole section 1212 can increase a wall thickness of the limiting protrusion 123 at the position of the second hole section 1212, thereby enhancing the structural strength of the limiting protrusion 123, and further reducing problems such as deformation or breakage of the limiting protrusion 123 due to impact or other reasons.

In some embodiments of the present application, as shown in FIGs. 5 and 8, an arc-shaped transition is formed between the first hole section 1211 and the elastic deformation structure.

Specifically, in the present application, the elastic deformation structure is set as a cylindrical structure, the cylindrical elastic deformation structure includes an axial first end and a second end, where the first end is disposed facing the first end cover assembly 13 and is connected to a hole wall of the limiting hole 121, and the second end is disposed away from the first end cover assembly 13 and is not connected to the hole wall of the limiting hole 121 and is spaced apart from the hole wall of the limiting hole 121. The second end of a side wall of the cylindrical structure is obliquely disposed from the hole wall of the limiting hole 121 to a direction of a central axis of the limiting hole 121, so that a distance between the second end and the hole wall of the limiting hole 121 is greater than a distance between the first end and the hole wall of the limiting hole 121, thereby forming the cylindrical structure into a truncated structure (the first end is a small end, and the second end is a large end).

The first end is connected to the hole wall of the limiting hole 121, an angle between an outer peripheral surface of the elastic deformation structure and the first hole section 1211 is an acute angle, and an angle between an outer peripheral surface of the elastic deformation structure and the second hole section 1212 is an obtuse angle. When the snap-fitting protrusion 131 having the limiting flange 1311 passes through the through hole 1231 on the elastic deformation structure, the elastic deformation structure undergoes elastic deformation in the first hole section 1211 towards a direction close to the hole wall of the limiting hole 121, so that the snap-fitting protrusion 131 having the limiting flange 1311 can pass through.

The arc-shaped transition is disposed at a connection position between the elastic deformation structure and the first hole section 1211. By setting the arc-shaped transition between the first hole section 1211 and the elastic deformation structure, stress concentration at the connection position between the elastic deformation structure and the first hole section 1211 is reduced, thereby reducing the problem of breakage of the elastic deformation structure due to stress concentration.

It should be noted that a radius of the arc-shaped transition between the first hole section 1211 and the elastic deformation structure may be set as required, and the specific values are not be described in detail in the present application.

In some embodiments of the present application, as shown in FIGs. 5, 10, 11, and 12, the snap-fitting protrusion 131 includes a limiting flange 1311, the limiting flange 1311 is snap-fitted with a side of the elastic deformation structure facing the main body portion 141, and the limiting flange 1311 is fully accommodated in the first hole section 1211.

Specifically, in the present application, the elastic deformation structure is set as a cylindrical structure, an axial direction of the cylindrical structure includes a first end and a second end, and the cylindrical elastic deformation structure is coaxially disposed in the limiting hole 121 of the limiting protrusion 123, where the first end of the cylindrical structure is disposed facing the first end cover assembly 13 and is connected to the hole wall of the limiting hole 121, the second end of the cylindrical structure is disposed facing the main body portion 141 and is spaced apart from a port of the limiting hole 121 facing the main body portion 141, and at the same time, the second end of the cylindrical structure is spaced apart from the hole wall of the limiting hole 121. The elastic deformation structure divides the through hole 1231 into a first hole section 1211 and a second hole section 1212, where the first hole section 1211 is located on a side of the elastic deformation structure facing the main body portion 141, and the second hole section 1212 is located on a side of the elastic deformation structure facing the first end cover assembly 13.

The snap-fitting protrusion 131 includes a limiting flange 1311, the limiting flange 1311 is spaced apart from the first end cover assembly 13, and a maximum diameter of the limiting flange 1311 is greater than a minimum diameter of the through hole 1231.

When the first end cover assembly 13 is assembled, the limiting flange 1311 is inserted into the limiting hole 121, and moves along the limiting hole 121 in a direction toward the elastic deformation structure, when the limiting flange 1311 is inserted into the through hole 1231, as the limiting flange 1311 is continuously inserted, when the limiting flange 1311 passes through a position (a position where a diameter of the limiting flange 1311 is greater than a diameter of the through hole 1231) with a small diameter, the limiting flange 1311 forms an extrusion on the hole wall of the through hole 1231. Under the driving force of the extrusion force, the elastic deformation structure undergoes elastic deformation (the deformation gap 1232 increases), so that the through hole 1231 is opened and the diameter is increased to meet the requirement for the limiting flange 1311 to pass through. After the limiting flange 1311 exits through the through hole 1231, the elastic deformation structure resets, and the opened through hole 1231 restores to its original diameter. The diameter of the reset through hole 1231 cannot allow the limiting flange 1311 to pass in reverse from the main body portion 141 to the first end cover assembly 13, so that the limiting flange 1311 is limited in the first hole section 1211 between the elastic deformation structure and the main body portion 141.

When the first end cover assembly 13 is assembled with the separator 12, the limiting flange 1311 is snap-fitted with the side of the elastic deformation structure facing the main body portion 141 and is accommodated by the first hole section 1211, thereby reducing the situation where the limiting flange 1311 protrudes from the limiting hole 121, thus further reducing the adverse effects on the main body portion 141 due to the limiting flange 1311 protruding from the limiting hole 121.

In some embodiments of the present application, as shown in FIGs. 5 and 8, the through hole 1231 includes a straight hole section 12311 and a transition hole section 12312, where the straight hole section 12311 and the transition hole section 12312 are connected, the straight hole section 12311 is disposed further away from the first end cover assembly 13 than the transition hole section 12312, one end of the transition hole section 12312 is connected to the straight hole section 12311, another end of the transition hole section 12312 is connected to the second hole section 1212, and along a direction from the first end cover assembly 13 to the main body portion 141, a size of the transition hole section 12312 tends to decrease.

Specifically, along a direction from the first end cover assembly 13 to the main body portion 141, a size of the transition hole section 12312 in the first direction b tends to decrease, that is, the transition hole section 12312 is set to be narrowed, where the narrowed setting may be continuous or discontinuous.

In the present application, the transition hole section 12312 and the straight hole section 12311 are connected in sequence, the transition hole section 12312 is disposed facing the first end cover assembly 13, and the straight hole section 12311 is disposed facing away from the first end cover assembly 13. In the thickness direction a of the separator 12, the transition hole section 12312 includes a large end and a small end, where the large end is disposed facing the first end cover assembly 13, the small end is disposed facing away from the first end cover assembly 13 and is connected to the straight hole section 12311, and a diameter of the small end is equal to a diameter of the straight hole section 12311.

During assembly, when the snap-fitting protrusion 131 is inserted into the through hole 1231, it first passes through the transition hole, then enters the straight hole section 12311, and finally the limiting flange 1311 of the snap-fitting protrusion 131 exits through the straight hole section 12311. Disposing the transition hole section 12312 achieves guiding of the snap-fitting protrusion 131 during insertion, improves the convenience of assembly, and effectively enhances the efficiency of assembly.

In some embodiments of the present application, as shown in FIGs. 5, 10, 11, and 12, the snap-fitting protrusion 131 also includes a connecting post 1312, the limiting flange 1311 is connected to the first end cover assembly 13 through the connecting post 1312, and at least a portion of the connecting post 1312 is accommodated in the through hole 1231.

Specifically, one end of the connecting post 1312 is connected to the limiting flange 1311, and another end of the connecting post 1312 is connected to the first end cover assembly 13, where the connecting post 1312 is perpendicular to the first end cover assembly 13 or forms an acute angle with the first end cover assembly 13.

When the first end cover assembly 13 is assembled, an end of the connecting post 1312 provided with the limiting flange 1311 is inserted into the limiting hole 121, and moves along the limiting hole 121 in a direction toward the elastic deformation structure. When the limiting flange 1311 is inserted into the through hole 1231, as the limiting flange 1311 is continuously inserted, when the limiting flange 1311 passes through a position (a position where a diameter of the limiting flange 1311 is greater than a diameter of the through hole 1231) with a small diameter, the limiting flange 1311 forms an extrusion on the hole wall of the through hole 1231. Under the driving force of the extrusion force, the elastic deformation structure undergoes elastic deformation (the deformation gap 1232 increases), so that the through hole 1231 is opened and the diameter is increased to meet the requirement for the limiting flange 1311 to pass through. After the limiting flange 1311 exits through the through hole 1231, the elastic deformation structure resets, and the opened through hole 1231 restores to its original diameter. The diameter of the reset through hole 1231 cannot allow the limiting flange 1311 to pass in reverse from the main body portion 141 to the first end cover assembly 13, so that the limiting flange 1311 is limited in the first hole section 1211 between the elastic deformation structure and the main body portion 141, and at least a portion of a main body of the connecting post 1312 is accommodated in the through hole 1231.

Disposing the connecting post 1312 spaces the limiting flange 1311 apart from the first end cover assembly 13, so that the limiting flange 1311 can be effectively inserted into the through hole 1231 of the elastic deformation structure and exit through the through hole 1231, thereby achieving a snap-fit engagement between the snap-fitting protrusion 131 and the elastic deformation structure.

It should be noted that the limiting flange 1311 and the connecting post 1312 may be integrally formed, or the limiting flange 1311 and the connecting post 1312 may be a split structure and connected and fixed by welding or bonding.

In some embodiments of the present application, as shown in FIGs. 5, 10, 11, and 12, the connecting post 1312 includes a first connecting portion 13121, where the first connecting portion 13121 is connected to the limiting flange 1311, a size of the first connecting portion 13121 along the first direction b is less than or equal to a size of the straight hole section 12311 along the first direction b, a size of the limiting flange 1311 along the first direction b is greater than a size of the straight hole section 12311 along the first direction b, and the first direction b is perpendicular to the thickness direction a of the separator 12.

Specifically, after the limiting flange 1311 exits through the elastic deformation structure, the limiting flange 1311 is disposed on a side of the elastic deformation structure facing the main body portion 141, and the first connecting portion 13121 is disposed in the through hole 1231.

By setting the sizes of the first connecting portion 13121 and the limiting flange 1311 in the first direction b, the elastic deformation structure can undergo elastic deformation when the limiting flange 1311 passes through the straight hole section 12311, and restore elastic deformation when the limiting flange 1311 exits, and the elastic deformation structure that has restored elastic deformation limits the limiting flange 1311, reducing the situation where the limiting flange 1311 falls off in reverse (from the main body portion 141 to the first end cover assembly 13), thereby improving the structural stability of the connection position.

In some embodiments of the present application, along the first direction b, a size of the first connecting portion 13121 is greater than or equal to 0.8 millimeters and less than or equal to 3 millimeters.

Specifically, the connecting post 1312 includes a first connecting portion 13121, the first connecting portion 13121 is connected to the limiting flange 1311, along the first direction b, a size of the first connecting portion 13121 is greater than or equal to 0.8 millimeters and less than or equal to 3 millimeters, a minimum diameter of the limiting hole 121 is greater than or equal to a size of the first connecting portion 13121, and a difference between a maximum size of the limiting flange 1311 and the minimum diameter of the limiting hole 121 is greater than zero and less than or equal to 0.2 millimeters.

The first connecting portion 13121 is a first cylindrical structure, the first cylindrical structure has two oppositely disposed ends, where one end is connected to the first end cover assembly 13, the other end is disposed facing away from the first end cover assembly 13 and is connected to the limiting flange 1311. A diameter of the first connecting portion 13121 is a first diameter d1, a maximum diameter of the limiting flange 1311 is a second diameter d2, and a minimum diameter of the limiting hole 121 is a third diameter d3, where 0.8 millimeters ≤ the first diameter d1 ≤ 3 millimeters, the first diameter d1 ≤ the third diameter d3, and at the same time, a difference between the second diameter d2 and the third diameter d3 is greater than or equal to 0.2 millimeters.

When the first end cover assembly 13 is assembled, an end of the snap-fitting protrusion 131 having the limiting flange 1311 is disposed facing the limiting hole 121, so that the end of the snap-fitting protrusion 131 having the limiting flange 1311 is inserted into the limiting hole 121 and an external force is used to push the first end cover assembly 13 along the thickness direction a of the separator 12, and the snap-fitting protrusion 131 moves relative to the limiting hole 121. During movement, when the limiting flange 1311 passes through a position of the minimum diameter of the limiting hole 121, due to the limiting flange 1311 forming an extrusion on an inner wall of the limiting hole 121, the deformation gap 1232 increases, thereby increasing a hole diameter of the limiting hole 121 to meet the requirement for the limiting flange 1311 to pass through. After installation, the limiting flange 1311 exits through the limiting hole 121 and is disposed on a side of the limiting protrusion 123 facing away from the first end cover assembly 13, the deformation gap 1232 restores elastic deformation and cannot allow the limiting flange 1311 to pass through, and the first connecting portion 13121 is inserted into the limiting hole 121.

The limiting flange 1311 is connected to the first end cover assembly 13 through the first connecting portion 13121, so that the limiting flange 1311 and the first end cover assembly 13 are spaced apart in the thickness direction a of the separator 12. By setting the size of the first connecting portion 13121, the minimum diameter of the limiting hole 121, and the diameter of the first connecting portion 13121, the limiting flange 1311 can effectively cooperate with the limiting hole 121, thereby achieving effective assembly of the first end cover assembly 13.

It should be understood that when the difference between the second diameter d2 and the third diameter d3 is larger, the extrusion force formed by the limiting flange 1311 on the inner wall of the limiting hole 121 when passing through the limiting hole 121 is larger, so that the elastic deformation amount of the deformation gap 1232 is larger. The specific value of the difference between the second diameter d2 and the third diameter d3 may be 0.2 millimeters, 0.3 millimeters, 0.4 millimeters, 0.5 millimeters, 0.6 millimeters, 0.7 millimeters, 0.8 millimeters, 0.9 millimeters, 1 millimeter, 1.1 millimeters, 1.2 millimeters, 1.3 millimeters, 1.4 millimeters, 1.5 millimeters, 1.6 millimeters, 1.7 millimeters, 1.8 millimeters, 1.9 millimeters, or 2 millimeters.

In addition, setting the value of the first diameter d1 of the first connecting portion 13121 between 0.8 millimeters and 3 millimeters can effectively control the volume of the first connecting portion 13121, reduce the occupation of the internal space of the housing 11 by the first connecting portion 13121, and thus effectively improve the space utilization rate within the housing 11.

The specific value of the first diameter d1 may be 0.8 millimeters, 1 millimeter, 1.2 millimeters, 1.4 millimeters, 1.6 millimeters, 1.8 millimeters, 2 millimeters, 2.2 millimeters, 2.4 millimeters, 2.6 millimeters, 2.8 millimeters, or 3 millimeters.

In addition, by setting the size of the first connecting portion 13121 in the first direction b, the structural strength of the first connecting portion 13121 can be enhanced, and the situation of breakage of the first connecting portion 13121 under stress is reduced.

In some embodiments of the present application, as shown in FIGs. 5, 10, 11, and 12, the connecting post 1312 also includes a transition connecting portion 13122, where the first connecting portion 13121 is connected to the first end cover assembly 13 through the transition connecting portion 13122, at least a portion of the transition connecting portion 13122 passes through the transition hole section 12312, and along a direction from the first end cover assembly 13 to the main body portion 141, a size of the transition connecting portion 13122 along the first direction b tends to decrease.

Specifically, in the present application, along a direction from the first end cover assembly 13 to the main body portion 141, a size of the transition connecting portion 13122 along the first direction b tending to decrease means that, along a direction from the first end cover 134 to the main body portion 141, the size of the transition connecting portion 13122 in the first direction b is set to decrease, that is, along the direction from the first end cover assembly 13 to the main body portion 141, the transition connecting portion 13122 is set to be narrowed, where the narrowed setting may be continuous or discontinuous.

In the present application, the transition connecting portion 13122 and the first connecting portion 13121 are connected in sequence. In the thickness direction a of the separator 12, the transition connecting portion 13122 includes a large end and a small end, where the large end is connected to the first end cover assembly 13, the small end is disposed facing away from the first end cover assembly 13 and is connected to the first connecting portion 13121, and a diameter of the small end is equal to a diameter of the first connecting portion 13121.

Providing the transition connecting portion 13122 can enhance the structural strength of the snap-fitting protrusion 131, and further reduce the occurrence of breakage of the snap-fitting protrusion during assembly.

In some embodiments of the present application, as shown in FIGs. 5, 10, 11, and 12, the connecting post 1312 also includes a second connecting portion 13123, the transition connecting portion 13122 is connected to the first end cover assembly 13 through the second connecting portion 13123, and the second connecting portion 13123 is accommodated in the second hole section 1212.

Specifically, along a direction from the first end cover assembly 13 to the main body portion 141, a size of the transition connecting portion 13122 along the first direction b tends to decrease, an end of the transition connecting portion 13122 facing the first end cover assembly 13 is a large end, an end of the transition connecting portion 13122 facing the main body portion 141 is a small end, and the first connecting portion 13121 and the second connecting portion 13123 are respectively connected to two opposite ends of the transition connecting portion 13122, where the first connecting portion 13121 is connected to the small end of the transition connecting portion 13122 and has a diameter consistent with the small end, and the second connecting portion 13123 is connected to the large end of the transition connecting portion 13122 and has a diameter consistent with the large end.

When the first end cover assembly 13 is assembled, the snap-fitting protrusion 131 is disposed facing the limiting hole 121, so that an end of the snap-fitting protrusion 131 having the limiting flange 1311 is inserted into the second straight hole section 12311 of the limiting hole 121, an external force is used to push the first end cover assembly 13 along the thickness direction a of the separator 12, the snap-fitting protrusion 131 moves relative to the limiting hole 121. During movement, when the limiting flange 1311 passes through a position of the minimum diameter of the limiting hole 121, due to the limiting flange 1311 forming an extrusion on the limiting hole 121, the deformation gap 1232 decreases, thereby increasing the hole diameter of the limiting hole 121 to meet the requirement for the limiting flange 1311 to pass through.

When the snap-fitting protrusion 131 and the limiting protrusion 123 are assembled, the limiting flange 1311 exits through the limiting hole 121 and abuts against a side of the limiting flange 1311 facing away from the first end cover assembly 13, the deformation gap 1232 restores elastic deformation and limits the limiting flange 1311 from exiting in reverse (from the main body portion 141 to the first end cover 134), the first connecting portion 13121 is inserted into the straight hole section 12311, the through hole 122 connecting portion is inserted into the transition hole section 12312, and the second connecting portion 13123 is inserted into the second straight hole section 12311.

The limiting flange 1311 is snap-fitted with a side of the elastic deformation structure facing the main body portion 141, so as to limit the first end cover assembly 13 in the thickness direction a of the separator 12. At the same time, the cooperation between the second straight hole section 12311 and the second connecting portion 13123 can limit the first end cover assembly 13 in the first direction b, reducing the situation where the snap-fitting protrusion 131 moves relative to the separator 12 in the first direction b, and further improving the assembly accuracy of the first end cover assembly 13.

In some embodiments of the present application, as shown in FIGs. 8 and 12, a first angle a1 is formed between a hole wall of the transition hole section 12312 and a central axis of the through hole 1231, a second angle a2 is formed between an outer peripheral surface of the transition connecting portion 13122 and a central axis of the connecting post 1312, and the first angle a1 is less than or equal to the second angle a2, where a direction of the central axis of the through hole 1231 is consistent with a direction of the central axis of the connecting post 1312.

Specifically, when the first angle a1 is less than the second angle a2, the outer peripheral surface of the transition connecting portion 13122 is spaced apart from the hole wall of the transition hole section 12312, and when the first angle a1 is equal to the second angle a2, the outer peripheral surface of the transition connecting portion 13122 is fitted to the hole wall of the transition hole section 12312.

By providing the transition hole section 12312 and the transition connecting portion 13122, the transition connecting portion 13122 can effectively adapt to the shape of the transition hole section 12312, reducing the influence of manufacturing tolerances and other factors on assembly, and allowing the assembly operation to be effectively performed.

It should be noted that in the present application, the transition hole section 12312 has a first truncated structure. By setting the transition hole section 12312 as the first truncated structure, the inner wall structure of the transition hole section 12312 may be more continuous, thereby allowing the limiting flange 1311 of the snap-fitting protrusion 131 to move more smoothly along the inner wall of the transition hole section 12312, and reducing the problem of assembly difficulty caused by jamming.

In addition, the transition connecting portion 13122 has a second truncated structure. By setting the transition connecting portion 13122 as the second truncated structure, the structure of the transition connecting portion 13122 may be more continuous, making processing more convenient and effectively enhancing processing efficiency.

In some embodiments of the present application, the first angle a1 is greater than or equal to 20 degrees and less than or equal to 75 degrees.

Specifically, by setting the first angle a1, the convenience of processing is improved while satisfying the guiding of the snap-fitting protrusion 131.

It should be noted that the specific value of the first angle a1 may be 20 degrees, 25 degrees, 30 degrees, 35 degrees, 40 degrees, 45 degrees, 50 degrees, 55 degrees, 60 degrees, 65 degrees, 70 degrees, or 75 degrees.

In some embodiments of the present application, the second inclination angle is greater than or equal to 20 degrees and less than or equal to 75 degrees.

Specifically, by setting the second angle a2, the transition connecting portion 13122 can effectively adapt to the structure of the transition hole section 12312, thereby allowing effective assembly.

It should be noted that the specific value of the second angle a2 may be 20 degrees, 25 degrees, 30 degrees, 35 degrees, 40 degrees, 45 degrees, 50 degrees, 55 degrees, 60 degrees, 65 degrees, 70 degrees, or 75 degrees.

In some embodiments of the present application, as shown in FIGs. 5, 10, 11, and 12, along a thickness direction a of the separator plate 124, the limiting flange 1311 tends to decrease.

Specifically, along a thickness direction a of the separator plate 124, the limiting flange 1311 tending to decrease means that, along a direction from the first end cover assembly 13 to the main body portion 141, a size of the transition hole section 12312 in the first direction b tends to decrease, that is, the transition hole section 12312 is set to be narrowed, where the narrowed setting may be continuous or discontinuous.

In the present application, by setting the limiting flange 1311, the side of the limiting flange 1311 facing away from the first end cover assembly 13 is set to be narrowed, thereby facilitating the insertion of the limiting flange 1311 into the limiting hole 121, and further improving the convenience of assembly.

It should be noted that, in the present application, a maximum diameter of the limiting flange 1311 is greater than a diameter of the straight hole section 12311 of the through hole 1231, so that during the process of the limiting flange 1311 passing through the limiting hole 121, the limiting flange 1311 drives the limiting hole 121, so that the elastic deformation structure undergoes elastic deformation in a direction toward the hole wall of the limiting hole 121 (the deformation gap 1232 increases) to allow the limiting flange 1311 to exit through the limiting hole 121.

In addition, in the present application, the structure of the limiting flange 1311 is truncated or mushroom-shaped. Setting the shape of the limiting flange 1311 improves the convenience of processing.

In some embodiments of the present application, as shown in FIGs. 5 to 9, the deformation gaps 1232 are provided in multiple, and the multiple deformation gaps 1232 are spaced apart along a circumferential direction of the limiting hole 121.

Specifically, by providing multiple deformation gaps 1232, the elastic deformation capability of the elastic deformation structure is improved, and the convenience of the snap-fitting protrusion 131 with the limiting flange 1311 inserting into the limiting hole 121 is improved, thereby effectively enhancing the efficiency of assembly.

It should be noted that the multiple deformation gaps 1232 may be spaced apart in the circumferential direction of the locking hole in an equally spaced manner or in an unequally spaced manner.

In some embodiments of the present application, the deformation gap 1232 is a linear structure or a curved structure.

Specifically, by setting the shape of the deformation gap 1232, the deformation gap 1232 may be provided according to demand, thereby meeting production requirements.

In some embodiments of the present application, along a circumferential direction of the limiting hole 121, a size of the deformation gap 1232 is greater than or equal to 0.3 millimeters and less than or equal to 1.5 millimeters.

Specifically, by setting the size of the deformation gap 1232 in the circumferential direction of the limiting hole 121, the limiting hole 121 has sufficient structural strength while having elastic deformation performance, reducing the occurrence of the snap-fitting protrusion 131 falling off.

It should be noted that in the present application, as shown in FIG. 6, along a circumferential direction of the limiting hole 121, a size of the deformation gap 1232 is a width dimension p of the deformation gap 1232, and the value of the width dimension p may be 0.3 millimeters, 0.4 millimeters, 0.5 millimeters, 0.6 millimeters, 0.7 millimeters, 0.8 millimeters, 0.9 millimeters, 1 millimeter, 1.1 millimeters, 1.2 millimeters, 1.3 millimeters, 1.4 millimeters, or 1.5 millimeters.

In some embodiments of the present application, as shown in FIGs. 6, 7, and 9, the separator 12 also includes a separator plate 124, and the limiting protrusion 123 protrudes from a side of the separator 12 facing the first end cover assembly 13.

Specifically, the separator 12 is disposed between the first end cover assembly 13 and the main body portion 141 of the electrode assembly 14, the separator plate 124 of the separator 12 is disposed between the first end cover assembly 13 and the main body portion 141, and the separator plate 124 is used to block the first end cover assembly 13 from the main body portion 141, thereby improving the blocking performance.

In addition, disposing the limiting protrusion 123 protruding from a side of the separator 12 facing the first end cover assembly 13 reduces the situation where the side of the separator 12 facing the main body portion 141 has a protruding structure, thereby reducing the occurrence of the separator 12 piercing the main body portion 141 due to the protruding structure, thus further effectively improving the safety performance of the battery cell 10.

It should be noted that the limiting protrusion 123 may be integrally formed with the separator plate 124, or may be a split structure and fixed to the separator plate 124 by bonding or welding.

In some embodiments of the present application, as shown in FIGs. 5, 6, and 9, the separator 12 also includes a side plate 125, the side plate 125 is enclosed around a circumference of the separator plate 124 and connected to the separator plate 124, and an end of the side plate 125 facing the main body portion 141 is flush with an end of the separator plate 124 facing the main body portion 141.

Specifically, the side plate 125 may be formed into a ring shape, for example, an annular shape, a rectangular shape, or other irregular shapes. The embodiments of the present application are not limited thereto.

The side plate 125 surrounds an outer side of the separator plate 124 and protrudes from a side of the separator plate 124 facing away from the main body portion 141. In this way, the separator plate 124 and the side plate 125 can jointly define an accommodating recess, and the accommodating recess can accommodate at least a portion of the tab 142, to improve the compactness of the structure.

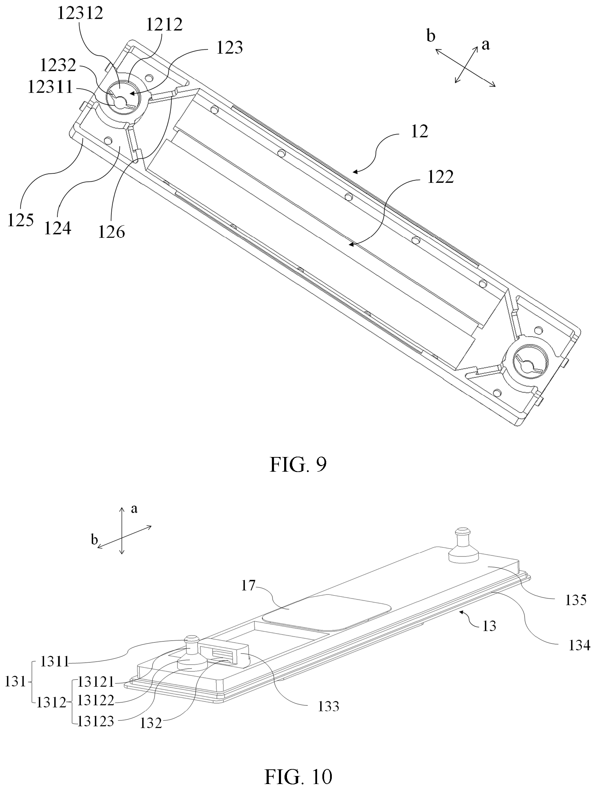

In some embodiments of the present application, as shown in FIGs. 6 and 9, the separator 12 also includes a reinforcing structure 126, and the reinforcing structure 126 is connected to a partition plate, the limiting protrusion 123, and the side plate 125, respectively.

Specifically, providing the reinforcing structure 126 enhances the connection strength between the limiting protrusion 123 and the separator plate 124, and reduces the occurrence of breakage of the limiting protrusion 123 relative to the separator plate 124.

It should be noted that the reinforcing structure 126 may be strip-shaped, for example, a linear strip shape.

In some embodiments of the present application, as shown in FIGs. 6 and 9, the reinforcing structures 126 are provided in multiple, and the multiple reinforcing structures 126 are spaced apart along a circumferential direction of the limiting protrusion 123.

Specifically, providing multiple reinforcing structures 126 further enhances the structural strength of the limiting protrusion 123, and further reduces the occurrence of breakage of the limiting protrusion 123 relative to the separator plate 124.

In some embodiments of the present application, as shown in FIGs. 10 to 12, the first end cover assembly 13 also includes a first end cover 134 and an insulating member 135, where the first electrode lead-out member 17 is disposed on the first end cover 134, the insulating member 135 includes an insulating body and a snap-fitting protrusion 131, the insulating body is disposed on a side of the first end cover 134 facing the main body portion 141, and the snap-fitting protrusion 131 is fixed to a side of the insulating body facing the main body portion 141.

Specifically, the snap-fitting protrusion 131 is connected to the insulating member 135, where the snap-fitting protrusion 131 and the insulating member 135 may be connected perpendicularly or at an acute angle. In addition, the snap-fitting protrusion 131 and the insulating member 135 may be an integral structure or a split structure, and connected by welding or bonding.

The first end cover 134 is connected to the insulating member 135, and the connection method between the two includes but is not limited to snap-fitting, bonding, or connecting via a connecting member. The insulating member 135 is configured to insulate the first cover plate and the electrode assembly 14.

The first electrode lead-out member 17 is disposed on the first cover plate, and the tab 142 of the electrode assembly 14 passes through the through hole 1231 of the separator 12 and is connected to the first electrode lead-out member 17.

The first cover plate may be made of metal and can conduct electricity, and the insulating member 135 may be a plastic product.

In the present application, by disposing the first end cover assembly 13, on the basis of achieving the connection and fixation of the first end cover assembly 13 and the separator 12, the first cover plate is effectively insulated, thereby further improving the insulation performance of the battery cell 10.

In some embodiments of the present application, the housing 11 also has a second opening opposite to the first opening, and the battery cell 10 also includes a second end cover assembly 15, where the second end cover assembly 15 is configured to cover the second opening.

Specifically, the first end cover assembly 13 and the second end cover assembly 15 are respectively configured to cover the first opening and the second opening at two ends of the housing 11, thereby facilitating sealing of the housing 11.

Optionally, the second end cover assembly 15 is not provided with an electrode terminal, only the first end cover assembly 13 is provided with an electrode terminal, and the electrode assembly 14 enters the housing 11 through the second opening.

Optionally, the second end cover assembly 15 is provided with an electrode terminal, and the electrode terminal is electrically connected to the tab 142 close to the second opening. The second end cover assembly 15 may have the same structure as the first end cover assembly 13, that is, the second end cover assembly 15 is provided with the same structure as the snap-fitting protrusion 131, and the second end cover assembly 15 may also have a different structure from the first end cover assembly 13.

The battery cell 10 may also include an insulating film 16, and the insulating film 16 is disposed on an outer surface of the electrode assembly 14 and may be used to insulate the electrode assembly 14 from the housing 11.

In addition, as shown in FIG. 10, the first end cover assembly 13 is provided with a liquid injection hole 132, and the liquid injection hole 132 is in communication with an interior of the housing 11, so that electrolyte can be injected into the interior of the housing 11. By providing the liquid injection hole 132 on the first end cover assembly 13, the electrolyte can be injected into the housing 11 through the liquid injection hole 132, thereby improving the convenience of electrolyte injection.

In addition, as shown in FIG. 10, a baffle 133 is disposed on the first end cover assembly 13, and the baffle 133 is disposed on a side of the first end cover assembly 13 facing the support member and is disposed opposite to the liquid injection hole 132. The baffle 133 is used to block the liquid injection hole 132, so as to reduce foreign matter from entering the interior of the battery cell 10 through the liquid injection hole 132.

A second aspect of the present application proposes a battery 100, where the battery 100 includes the battery cell 10 as described above.

When assembling the battery cell 10 in the battery 100, the separator 12 is disposed in the housing 11, then the snap-fitting protrusion 131 of the first end cover assembly 13 is inserted into the limiting hole 121 of the limiting protrusion 123, and as the snap-fitting protrusion 131 is gradually inserted, the snap-fitting protrusion 131 enters the through hole 1231 of the elastic deformation structure. When the snap-fitting protrusion 131 passes through the through hole 1231, the elastic deformation structure undergoes elastic deformation, so that the snap-fitting protrusion 131 can be snap-fitted with the elastic deformation structure. Providing the elastic deformation structure on the separator 12 eliminates the need for a deformation structure on the snap-fitting protrusion 131 to meet the assembly requirements, thereby enhancing the structural strength of the snap-fitting protrusion 131 and reducing the occurrence of breakage of the snap-fitting protrusion 131 during assembly.

A third aspect of the present application provides an electric device, where the electric device includes the battery 100 as described above.

In the electric device, when assembling the battery cell 10 in the battery 100, the separator 12 is disposed in the housing 11, then the snap-fitting protrusion 131 of the first end cover assembly 13 is inserted into the limiting hole 121 of the limiting protrusion 123, and as the snap-fitting protrusion 131 is gradually inserted, the snap-fitting protrusion 131 enters the through hole 1231 of the elastic deformation structure. When the snap-fitting protrusion 131 passes through the through hole 1231, the elastic deformation structure undergoes elastic deformation, so that the snap-fitting protrusion 131 can be snap-fitted with the elastic deformation structure. Providing the elastic deformation structure on the separator 12 eliminates the need for a deformation structure on the snap-fitting protrusion 131 to meet the assembly requirements, thereby enhancing the structural strength of the snap-fitting protrusion 131 and reducing the occurrence of breakage of the snap-fitting protrusion 131 during assembly.

The foregoing description is merely an overview of the technical solution of the present application. For a better understanding of the technical means in the present application such that they can be implemented according to the content of the specification, and to make the above and other objectives, features, and advantages of the present application more obvious and easier to understand, the following describes specific embodiments of the present application.

In the embodiments of the present application, as shown in FIGs. 3 to 12, the present application proposes a battery cell 10 including a housing 11, a first end cover assembly 13, an electrode assembly 14, and a separator 12. The housing 11 includes a first opening, the first end cover assembly 13 is configured to cover the first opening, and the first end cover assembly 13 includes a snap-fitting protrusion 131 and a first electrode lead-out member 17. The electrode assembly 14 is accommodated in the housing 11, and the electrode assembly 14 includes a main body portion 141 and a tab 142 extending from the main body portion 141. At least part of the separator 12 is disposed between the first electrode lead-out member 17 and the main body portion 141, and the tab 142 passes through the separator 12 and is electrically connected to the first electrode lead-out member 17. The separator 12 includes a limiting protrusion 123, a limiting hole 121 is formed on the limiting protrusion 123, the limiting hole 121 is formed along a thickness direction a of the separator 12, an elastic deformation structure is disposed on a hole wall of the limiting hole 121, and the snap-fitting protrusion 131 is snap-fitted with the elastic deformation structure. The elastic deformation structure includes a through hole 1231, the through hole 1231 is in communication with the limiting hole 121, and the elastic deformation structure is configured to undergo elastic deformation when the snap-fitting protrusion 131 is inserted into the limiting hole 121 and passes through the through hole 1231.

Specifically, the elastic deformation structure is a cylindrical structure, an interior of the cylindrical structure forms the through hole 1231, a deformation gap 1232 is formed on the cylindrical structure, and a gap is disposed between an outer peripheral surface of the elastic deformation structure and the hole wall of the limiting hole 121. The gap between the outer peripheral surface of the elastic deformation structure and the hole wall of the limiting hole 121 tends to increase along a direction from the first end cover assembly 13 to the main body portion 141. The cylindrical structure extends obliquely along a direction from the first end cover assembly 13 to the main body portion 141. The snap-fitting protrusion 131 includes a limiting flange 1311, the cylindrical structure is configured such that when the limiting flange 1311 passes through the through hole 1231, a size of the deformation gap 1232 expands and a diameter of the through hole 1231 increases, and after the limiting flange 1311 exits the through hole 1231, the deformation gap 1232 resets and the diameter of the through hole 1231 resets, and the limiting flange 1311 is snap-fitted with a side of the elastic deformation structure facing the main body portion 141. An end of the elastic deformation structure facing the main body portion 141 is spaced apart from the main body portion 141, the limiting flange 1311 is disposed between the elastic deformation structure and the main body portion 141, and a distance between the limiting flange 1311 and the main body portion 141 is greater than or equal to zero. The limiting hole 121 includes a first hole section 1211 and a second hole section 1212, the first hole section 1211 and the second hole section 1212 are located on two opposite sides of the elastic deformation structure, and the first hole section 1211 is disposed closer to the main body portion 141 than the second hole section 1212, where a diameter of the first hole section 1211 is greater than a diameter of the second hole section 1212. An arc-shaped transition is formed between the first hole section 1211 and the elastic deformation structure. The snap-fitting protrusion 131 includes a limiting flange 1311, the limiting flange 1311 is snap-fitted with a side of the elastic deformation structure facing the main body portion 141, and the limiting flange 1311 is fully accommodated in the first hole section 1211. The through hole 1231 includes a straight hole section 12311 and a transition hole section 12312, where the straight hole section 12311 and the transition hole section 12312 are connected, the straight hole section 12311 is disposed further away from the first end cover assembly 13 than the transition hole section 12312, one end of the transition hole section 12312 is connected to the straight hole section 12311, another end of the transition hole section 12312 is connected to the second hole section 1212, and along a direction from the first end cover assembly 13 to the main body portion 141, a size of the transition hole section 12312 tends to decrease. The limiting flange 1311 is connected to the first end cover assembly 13 through the connecting post 1312, and at least a portion of the connecting post 1312 is accommodated in the through hole 1231. The connecting post 1312 includes a first connecting portion 13121, the first connecting portion 13121 is connected to the limiting flange 1311, a size of the first connecting portion 13121 along a first direction b is less than or equal to a size of the straight hole section 12311 along the first direction b, a size of the limiting flange 1311 along the first direction b is greater than a size of the straight hole section 12311 along the first direction b, and the first direction b is perpendicular to a thickness direction a of the separator 12. Along the first direction b, a size of the first connecting portion 13121 is greater than or equal to 0.8 millimeters and less than or equal to 3 millimeters. The connecting post 1312 also includes a transition connecting portion 13122, where the first connecting portion 13121 is connected to the first end cover assembly 13 through the transition connecting portion 13122, at least a portion of the transition connecting portion 13122 passes through the transition hole section 12312, and along a direction from the first end cover assembly 13 to the main body portion 141, a size of the transition connecting portion 13122 along the first direction b tends to decrease. The connecting post 1312 also includes a second connecting portion 13123, the transition connecting portion 13122 is connected to the first end cover assembly 13 through the second connecting portion 13123, and the second connecting portion 13123 is accommodated in the second hole section 1212. A first angle a1 is formed between a hole wall of the transition hole section 12312 and a central axis of the through hole 1231, a second angle a2 is formed between an outer peripheral surface of the transition connecting portion 13122 and a central axis of the connecting post 1312, and the first angle a1 is less than or equal to the second angle a2, where a direction of the central axis of the through hole 1231 is consistent with a direction of the central axis of the connecting post 1312. The first angle a1 is greater than or equal to 20 degrees and less than or equal to 75 degrees. The second inclination angle is greater than or equal to 20 degrees and less than or equal to 75 degrees. Along a thickness direction a of the separator plate 124, a surface of the limiting flange 1311 tends to decrease. The deformation gaps 1232 are provided in multiple, and the multiple deformation gaps 1232 are spaced apart along a circumferential direction of the limiting hole 121. The deformation gap 1232 is a linear structure or a curved structure. Along a circumferential direction of the limiting hole 121, a size of the deformation gap 1232 is greater than or equal to 0.3 millimeters and less than or equal to 1.5 millimeters. The separator 12 also includes a separator plate 124, and the limiting protrusion 123 protrudes from a side of the separator 12 facing the first end cover assembly 13. The separator 12 also includes a side plate 125, the side plate 125 is enclosed around a circumference of the separator plate 124 and connected to the separator plate 124, and an end of the side plate 125 facing the main body portion 141 is flush with an end of the separator plate 124 facing the main body portion 141. The separator 12 also includes a reinforcing structure 126, and the reinforcing structure 126 is connected to a partition plate, the limiting protrusion 123, and the side plate 125, respectively. The reinforcing structures 126 are provided in multiple, and the multiple reinforcing structures 126 are spaced apart along a circumferential direction of the limiting protrusion 123. The first end cover assembly 13 also includes a first end cover 134 and an insulating member 135, where the first electrode lead-out member 17 is disposed on the first end cover 134, the insulating member 135 includes an insulating body and a snap-fitting protrusion 131, the insulating body is disposed on a side of the first end cover 134 facing the main body portion 141, and the snap-fitting protrusion 131 is fixed to a side of the insulating body facing the main body portion 141. The housing 11 also has a second opening opposite to the first opening, and the battery cell 10 also includes a second end cover assembly 15, where the second end cover assembly 15 is configured to cover the second opening.

Specifically, during assembly, the separator 12 is disposed in the housing 11, then the snap-fitting protrusion 131 of the first end cover assembly 13 is inserted into the limiting hole 121 of the limiting protrusion 123, and as the snap-fitting protrusion 131 is gradually inserted, the snap-fitting protrusion 131 enters the through hole 1231 of the elastic deformation structure. When the snap-fitting protrusion 131 passes through the through hole 1231, the elastic deformation structure undergoes elastic deformation, so that the snap-fitting protrusion 131 can be snap-fitted with the elastic deformation structure. Providing the elastic deformation structure on the separator 12 eliminates the need for a deformation structure on the snap-fitting protrusion 131 to meet the assembly requirements, thereby enhancing the structural strength of the snap-fitting protrusion 131 and reducing the occurrence of breakage of the snap-fitting protrusion 131 during assembly.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery cell, **characterized in that** the battery cell comprises:
a housing, the housing comprising a first opening;
a first end cover assembly, wherein the first end cover assembly is configured to cover the first opening, and the first end cover assembly comprises a snap-fitting protrusion and a first electrode lead-out member;
an electrode assembly, wherein the electrode assembly is accommodated in the housing, and the electrode assembly comprises a main body portion and a tab extending from the main body portion; and
a separator, wherein at least part of the separator is disposed between the first electrode lead-out member and the main body portion, the tab passes through the separator and is electrically connected to the first electrode lead-out member, the separator comprises a limiting protrusion, a limiting hole is formed on the limiting protrusion, the limiting hole is formed along a thickness direction of the separator, an elastic deformation structure is disposed on a hole wall of the limiting hole, and the snap-fitting protrusion is snap-fitted with the elastic deformation structure;
wherein the elastic deformation structure comprises a through hole, the through hole is in communication with the limiting hole, and the elastic deformation structure is configured to undergo elastic deformation when the snap-fitting protrusion is inserted into the limiting hole and passes through the through hole.

2. The battery cell according to claim 1, **characterized in that** the elastic deformation structure is a cylindrical structure, an interior of the cylindrical structure forms the through hole, a deformation gap is formed on the cylindrical structure, and a gap is disposed between an outer peripheral surface of the elastic deformation structure and the hole wall of the limiting hole.

3. The battery cell according to claim 2, **characterized in that** the gap between the outer peripheral surface of the elastic deformation structure and the hole wall of the limiting hole tends to increase along a direction from the first end cover assembly to the main body portion; and/or the cylindrical structure extends obliquely along a direction from the first end cover assembly to the main body portion.

4. The battery cell according to claim 2 or 3, **characterized in that** the snap-fitting protrusion comprises a limiting flange, the cylindrical structure is configured such that when the limiting flange passes through the through hole, a size of the deformation gap expands and a diameter of the through hole increases, and after the limiting flange exits the through hole, the deformation gap resets and the diameter of the through hole resets, and the limiting flange is snap-fitted with a side of the elastic deformation structure facing the main body portion.

5. The battery cell according to claim 4, **characterized in that** an end of the elastic deformation structure facing the main body portion is spaced apart from the main body portion, the limiting flange is disposed between the elastic deformation structure and the main body portion, and a distance between the limiting flange and the main body portion is greater than or equal to zero.

6. The battery cell according to any one of claims 1 to 5, **characterized in that** the limiting hole comprises a first hole section and a second hole section, wherein the first hole section and the second hole section are located on two opposite sides of the elastic deformation structure, and the first hole section is disposed closer to the main body portion than the second hole section;
wherein a diameter of the first hole section is greater than a diameter of the second hole section.

7. The battery cell according to claim 6, **characterized in that** an arc-shaped transition is formed between the first hole section and the elastic deformation structure.

8. The battery cell according to any one of claims 6 to 7, **characterized in that** the snap-fitting protrusion comprises a limiting flange, the limiting flange is snap-fitted with a side of the elastic deformation structure facing the main body portion, and the limiting flange is fully accommodated in the first hole section.

9. The battery cell according to claim 8, **characterized in that** the through hole comprises a straight hole section and a transition hole section, wherein the straight hole section and the transition hole section are connected, the straight hole section is disposed further away from the first end cover assembly than the transition hole section, one end of the transition hole section is connected to the straight hole section, another end of the transition hole section is connected to the second hole section, and along a direction from the first end cover assembly to the main body portion, a size of the transition hole section tends to decrease.

10. The battery cell according to claim 9, **characterized in that** the snap-fitting protrusion also comprises a connecting post, the limiting flange is connected to the first end cover assembly through the connecting post, and at least a portion of the connecting post is accommodated in the through hole.

11. The battery cell according to claim 10, **characterized in that** the connecting post comprises a first connecting portion, wherein the first connecting portion is connected to the limiting flange, a size of the first connecting portion along a first direction is less than or equal to a size of the straight hole section along the first direction, a size of the limiting flange along the first direction is greater than a size of the straight hole section along the first direction, and the first direction is perpendicular to a thickness direction of the separator.

12. The battery cell according to claim 11, **characterized in that** along the first direction, a size of the first connecting portion is greater than or equal to 0.8 millimeters and less than or equal to 3 millimeters.

13. The battery cell according to claim 11 or 12, **characterized in that** the connecting post also comprises a transition connecting portion, wherein the first connecting portion is connected to the first end cover assembly through the transition connecting portion, at least a portion of the transition connecting portion passes through the transition hole section, and along a direction from the first end cover assembly to the main body portion, a size of the transition connecting portion along the first direction tends to decrease.

14. The battery cell according to claim 13, **characterized in that** the connecting post also comprises a second connecting portion, the transition connecting portion is connected to the first end cover assembly through the second connecting portion, and the second connecting portion is accommodated in the second hole section.

15. The battery cell according to any one of claims 9 to 14, **characterized in that** a first angle is formed between a hole wall of the transition hole section and a central axis of the through hole, a second angle is formed between an outer peripheral surface of the transition connecting portion and a central axis of the connecting post, and the first angle is less than or equal to the second angle, wherein a direction of the central axis of the through hole is consistent with a direction of the central axis of the connecting post.

16. The battery cell according to claim 15, **characterized in that** the first angle is greater than or equal to 20 degrees and less than or equal to 75 degrees;
and/or, the second inclination angle is greater than or equal to 20 degrees and less than or equal to 75 degrees.

17. The battery cell according to claim 4 or 8, **characterized in that** along a thickness direction of a separator plate, the limiting flange tends to decrease.

18. The battery cell according to any one of claims 2 to 5, **characterized in that** the deformation gaps are provided in multiple, and the multiple deformation gaps are spaced apart along a circumferential direction of the limiting hole.

19. The battery cell according to any one of claims 2 to 5, **characterized in that** the deformation gap is a linear structure or a curved structure.

20. The battery cell according to any one of claims 2 to 5, **characterized in that** along a circumferential direction of the limiting hole, a size of the deformation gap is greater than or equal to 0.3 millimeters and less than or equal to 1.5 millimeters.

21. The battery cell according to any one of claims 1 to 20, **characterized in that** the separator also comprises a separator plate, and the limiting protrusion protrudes from a side of the separator facing the first end cover assembly.

22. The battery cell according to claim 21, **characterized in that** the separator also comprises a side plate, the side plate is enclosed around a circumference of the separator plate and connected to the separator plate, and an end of the side plate facing the main body portion is flush with an end of the separator plate facing the main body portion.

23. The battery cell according to claim 22, **characterized in that** the separator also comprises a reinforcing structure, and the reinforcing structure is connected to the partition plate, the limiting protrusion, and the side plate, respectively.

24. The battery cell according to claim 23, **characterized in that** the reinforcing structures are provided in multiple, and the multiple reinforcing structures are spaced apart along a circumferential direction of the limiting protrusion.

25. The battery cell according to any one of claims 1 to 24, **characterized in that** the first end cover assembly also comprises a first end cover and an insulating member, wherein the first electrode lead-out member is disposed on the first end cover, the insulating member comprises an insulating body and the snap-fitting protrusion, the insulating body is disposed on a side of the first end cover facing the main body portion, and the snap-fitting protrusion is fixed to a side of the insulating body facing the main body portion.

26. The battery cell according to any one of claims 1 to 24, **characterized in that** the housing also has a second opening opposite to the first opening; and
the battery cell also comprises a second end cover assembly, wherein the second end cover assembly is configured to cover the second opening.

27. A battery, **characterized in that** the battery comprises the battery cell according to any one of claims 1 to 26.

28. An electric device, **characterized in that** the electric device comprises the battery according to claim 27.
